(19) Europäisches Patentamt / European Patent Office / Office européen des brevets

(11) **EP 1 703 271 B1**

(12) **EUROPÄISCHE PATENTSCHRIFT**

(45) Veröffentlichungstag und Bekanntmachung des Hinweises auf die Patenterteilung:
**18.08.2010 Patentblatt 2010/33**

(51) Int Cl.:
***G01N 21/27*** *(2006.01)* ***G01N 21/64*** *(2006.01)*

(21) Anmeldenummer: **06111148.0**

(22) Anmeldetag: **15.03.2006**

(54) **Kalibriereinrichtung und Farbstoffkit sowie ihre Verwendung zur Charakterisierung von Lumineszenzmesssystemen**

Calibration device and dye kit and utilisation thereof for characterising luminescence measuring systems

Dispositif de calibrage et ensemble de colorants, tout comme son utilisation destinée à la caractérisation de systèmes luminescents

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **18.03.2005 DE 102005013228**
**11.10.2005 DE 102005049365**

(43) Veröffentlichungstag der Anmeldung:
**20.09.2006 Patentblatt 2006/38**

(73) Patentinhaber:
- **BAM Bundesanstalt für Materialforschung und -prüfung**
  **12205 Berlin (DE)**
- **Sigma-Aldrich GmbH**
  **9470 Buchs (CH)**

(72) Erfinder:
- **Resch-Genger, Dr. Ute**
  **12203, Berlin (DE)**
- **Hoffmann, Dr. Katrin**
  **12524, Berlin (DE)**
- **Pfeifer, Dr. Dietmar**
  **12459, Berlin (DE)**
- **Nitschke, Dr. rer. nat. Roland**
  **79194, Gundelfingen (DE)**
- **Nording, Pierre**
  **9473, Gams SG (CH)**

(74) Vertreter: **Zimmermann & Partner**
**Josephspitalstrasse 15**
**80331 München (DE)**

(56) Entgegenhaltungen:
**EP-A- 1 213 328**
**WO-A-2004/065995**
**DE-A1- 10 200 865**
**DE-A1- 10 352 123**
**DE-A1- 19 847 370**
**US-A1- 2002 092 973**
**US-A1- 2002 154 396**
**US-B1- 6 635 487**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft eine Kalibriereinrichtung zur Charakterisierung von Lumineszenzmesssystemen, insbesondere von spektral auflösenden, Weitfeld- und/oder konfokalen Imagingsystemen, ein Kit umfassend die Kalibriereinrichtung und ein Farbstoffset sowie Verwendungen der Einrichtung oder des Kits.

Jede Lumineszenzmesstechnik liefert Messdaten, die sich aus analyt- und gerätespezifischen Beiträgen zusammensetzen. Die nicht erwünschten gerätespezifischen Beiträge spiegeln die Wellenlängen- und Polarisationsabhängigkeit von Gerätekomponenten des verwendeten Messgerätes wieder. Verantwortlich für diese Abhängigkeiten sind insbesondere die im Anregungs- und Emissionskanal des Gerätes enthaltenen optischen Bauelemente, die Anregungslichtquelle und die eingesetzten Detektionssysteme. Die Vergleichbarkeit von Lumineszenzdaten über Geräte- und Laborgrenzen hinaus, die Erfassung der Gerätealterung, der Anspruch auf Rückführbarkeit von Lumineszenzdaten auf radiometrische Primärnormale (entsprechend der allgemeinen Forderung in EN ISO/IEC 17025) sowie viele quantitative Fluoreszenzaussagen, die Bestimmung von relativen Fluoreszenzquantenausbeuten und die Optimierung von Lumineszenzmethoden erfordern die Ermittlung dieser gerätespezifischen Beiträge. Dies gilt insbesondere für vergleichende Bewertungen von spektral gegeneinander verschobenen Lumineszenzprofilen oder für Emissionsmessungen bei verschiedenen Anregungswellenlängen. Bei konfokalen spektralen Imagingsystemen müssen darüber hinaus noch Geräteparameter, wie die Homogenität der Ausleuchtung, die spektrale und die Ortsauflösung (x, y, z) u.a., ermittelt werden. Ein wichtiges Einsatzgebiet konfokaler Mikroskope mit spektral auflösenden Detektoren ist das pixelweise Entmischen von einander überlappenden Farbstoffemissionen in mehrfach fluoreszenzmarkierten Präparaten. Für die Überprüfung der Robustheit gegenüber Störeinflüssen, wie z.B. schlechten Signal/Rausch-Verhältnissen und Genauigkeit der Quantifizierung bei sehr unterschiedlichen Konzentrationen gibt es bisher keine Standardpräparate.

Photolumineszenzmessgeräte bestehen aus einem Anregungskanal, der u.a. eine Anregungslichtquelle und ein wellenlängenselektierendes optisches Bauelement enthält und einem meist rechtwinklig zum Strahlengang des Anregungslichtes angeordneten Emissionskanal, mit dem das von dem im Probenraum befindlichen Fluorophor nach Lichtabsorption emittierte Licht (Photolumineszenz) aufgezeichnet wird. Oftmals wird über einen Strahlteiler ein definierter Teil des Anregungslichtes in einen Referenzkanal eingekoppelt, der ein optisches Bauelement wie einen Spiegel oder einen Streuer und einen (Referenz-) Detektor enthält. Mit dem Referenzkanal wird die aktuelle Anregungslichtintensität bei der Anregungswellenlänge aufgezeichnet, um so kurzzeitige Schwankungen der Anregungslichtintensität zu erfassen. Die Erfassung der oben genannten gerätespezifischen Beiträge zum Fluoreszenzsignal kann durch die Ermittlung so genannter Korrekturfunktionen erfolgen, die die Wellenlängen- und Polarisationsabhängigkeiten dieser Effekte für den Emissions- und den Anregungskanal des jeweiligen Gerätes beschreiben. Diese Korrekturfunktionen werden dabei separat ermittelt. Die Emissionskorrekturfunktion enthält dabei die wellenlängen- und polarisationsabhängige Transmissionseffizienz der optischen Bauteile im Emissionskanal und die wellenlängen- und polarisationsabhängige spektrale Empfindlichkeit des eingesetzten Detektionssystems. Die Anregungskorrekturfunktion beschreibt die wellenlängenabhängige spektrale Strahldichte der Anregungslichtquelle und die wellenlängen- und polarisationsabhängige Transmissionseffizienz der optischen Bauteile im Anregungskanal.

Bekannt ist der Einsatz zertifizierter physikalischer Transferstandards zur Erfassung der gerätespezifischen Effekte. Zur Kalibrierung des Anregungskanals kommen dabei typischerweise zertifizierte Empfängernormale zum Einsatz und für die Kalibrierung des Emissionskanals zertifizierte Standardlampen. Für den Einsatz physikalischer Transfernormale nachteilig sind die für die Anwendung notwendigen guten Optikkenntnisse des Anwenders, ihr schwieriger Einbau, kostenintensive Rekalibrierungen, brenndauerabhängige Änderungen der spektralen Strahldichte von Standardlampen, und im Falle der Emissionskorrektur mit Standardlampen die unterschiedlichen Emissionscharakteristika von Lampe und Probe und die um mindestens mehr als drei Größenordnungen unterschiedlichen spektralen Strahldichten von Transfernormal und einer typischen lumineszierenden Probe. Dies alles kann zu fehlerbehafteten und unbefriedigenden Korrekturfunktionen führen und ist zudem aufwändig und kostenintensiv. Physikalische Transferstandards sind außerdem zumeist nicht für die Kalibrierung von einfachen kompakten Photolumineszenzmesssystemen geeignet.

Für die Anregungskorrektur werden auch so genannte Quantenzähler eingesetzt. Dies sind hochkonzentrierte Farbstofflösungen, die einfallende Lichtquanten vollständig absorbieren und mit einer wellenlängenunabhängigen Fluoreszenzquantenausbeute emittieren. Quantenzähler liefern sehr konzentrations- und geometrieabhängige Messdaten und sind zudem anfällig für Polarisationseffekte. Standardisierte Kalibrierverfahren mit definierten Konzentrationen in Kombination mit definierten Messgeometrien sind für Quantenzähler nicht verfügbar.

Bekannt sind ebenfalls so genannte Fluoreszenzstandards, die typischerweise auf der Photolumineszenz einer chemischen Verbindung basieren. Spektrale Fluoreszenzstandards oder so genannte Emissions- und Anregungsstandards mit bekannten, (für gerätespezifische Effekte) korrigierten Emissions- bzw. Anregungsspektren können zur Ermittlung der spektralen Charakteristika von Photolumineszenzmesssystemen im Rahmen einer Gerätekalibrierung verwendet werden. Solche Fluoreszenzstandards werden in verschiedenen Formen eingesetzt, insbesondere in Form von Lösungen oder eingebettet in feste Polymer- oder Glasmatrizes. Vorteil von Fluoreszenzstandards, insbesondere in

Form von Lösungen, ist, dass sich diese mit den zu untersuchenden lumineszierenden Proben hinsichtlich ihrer Lumineszenzintensität und Emissionscharakteristika stark ähneln. Fluoreszenzstandards erlauben somit die (spektrale) Kalibrierung unter den bei typischen Probenmessungen angewandten Bedingungen. Fluoreszenzstandards lassen sich in vielen verschiedenen Gerätetypen, Formaten und Messgeometrien vermessen und sind somit auch zur Kalibrierung von Fluoreszenzmesssystemen mit speziellen Probengeometrien oder -formaten geeignet, beispielsweise mit Mikroküvetten, Mikrotiterplatten oder Kryostatsystemen. Allein Fluoreszenzstandards erlauben die Durchführung der Kalibrierung in der selben Küvetten- und Messanordnung wie die eigentliche Probenmessung und liefern auf diese Weise optimale Kalibrierergebnisse. Problematisch bei Fluoreszenzstandards ist die Vielzahl der zu definierenden Stoff- und Lumineszenzeigenschaften. Voraussetzung für die Eignung eines Transferstandards ist die vollständige Charakterisierung aller applikationsrelevanten Eigenschaften inklusive der verwendeten Methode und der Angabe der Messunsicherheit und eine hinreichenden Langzeitstabilität im festen reinen Zustand und in Lösung bzw. eingebettet in einer Matrix.

In der Fachliteratur sind zahlreiche Empfehlungen zu Fluoreszenzstandards umfassend diskutiert, auch zu Emissions- und Anregungsstandards sowie zu Fluoreszenzquantenausbeutestandards (z.B. U. Resch-Genger et al., J. Fluoresc. 2005, 15(3), 315ff; U. Resch-Genger et al., J. Fluoresc. 2005, 15(3), 337ff). Chininsulfatdihydrat (SRM936) ist bislang jedoch der einzige Emissionsstandard, dessen korrigiertes Emissionsspektrum von einem Staatsinstitut, hier vom National Institut for Standards and Technology (NIST, USA), mit einem rückführbar charakterisierten Referenzfluormeter mit bekannter Messunsicherheit zertifiziert wurde (R.A. Velapoldi, K.D. Mielenz, NBS Spec. Publ. 1980, 260-264, PB 80132046, Springfield, VA). Allein zu diesem Standard sind Angaben zur Farbstoffreinheit, zur Kalibrierung des eingesetzten Spektrometers, zu den verwendeten Messparametern und zur Messunsicherheit verfügbar.

Der Spektralbereich, in dem ein Fluoreszenzstandard zur Kalibrierung eingesetzt werden kann, ist durch die Lage und Breite der Fluoreszenzbande limitiert, wobei im Falle von Anregungsstandards möglichst nur die langwelligste Bande eingesetzt werden sollte. Der Emissionsstandard Chininsulfat deckt z. B. nur den Spektralbereich von ca. 400 bis 550 nm ab. Um ein Photolumineszenzmesssystem im gesamten UV/vis/NIR-Spektralbereich zu kalibrieren, ist somit die Kombination mehrerer hinsichtlich ihrer Fluoreszenzspektren aufeinander abgestimmter Chromophore erforderlich. Es gibt aber bislang nur sehr wenige Beispiele für Standardkombinationen. Bekannt ist beispielsweise eine Kombination von Emissionsstandards, die aus fluorophorhaltigen Polymerfolien mit NIST-zertifizierten Emissionsspektren bestehen (A. Thompson, K. L. Eckerle, SPIE 1989, 1054, 20, J.W. Hofstraat & M.J. Latuhihin, Appl. Spectrosc. 1994, 48, 436). Dieses System erfordert eine definierte Messgeometrie, die Verwendung von Polarisatoren und die Durchführung von Lumineszenzmessungen in Front-Face-Geometrie und ist somit für die Kalibrierung einfacher Messsysteme nicht geeignet. Auch weichen die Messbedingungen von typischen Bedingungen für flüssige Proben ab. Eine Kombination der einzelnen Teilkorrekturfunktionen zu einer Gesamtkorrekturfunktion wird nicht beschrieben.

Weiterhin sind fluorophorhaltige Polymethylmethacrylat (PMMA)-Blöcke in Küvettenform als Emissions- und Anregungsstandards bekannt. Die verwendeten Fluorophore weisen i. A. stark strukturierte Emissions- und Anregungsspektren sowie steil ansteigende Flanken auf, wodurch eine nicht mehr vernachlässigbare Abhängigkeit der Fluoreszenzprofile vom Monochromatorbandpass und eine Erhöhung der Kalibrierunsicherheit entsteht. Zudem führen Unsicherheiten in der Wellenrichtigkeit so zu großen Fehlern bei der Fluoreszenzintensität. Die Spektren sind nicht rückführbar, sie sind nicht aufeinander abgestimmt und lassen sich nicht zu einer Gesamtkorrekturfunktion verknüpfen.

Andere bekannte Farbstofflösungen unterschiedlicher Fluorophore sind häufig mit dem Problem schmaler, steil ansteigender Emissionsbanden sowie eines unzureichenden spektralen Abstands von Absorptions- und Emissionsbande behaftet. Dies macht sie als Emissionsstandards ungeeignet. Einige Substanzen weisen zu geringe Photostabilitäten auf und bilden unter typischen Anregungs- und Messbedingungen Photoprodukte mit eigenen spektralen Beiträgen. Dies gilt besonders für ihre Anwendung in Geräten mit hohen Beleuchtungsstärken, insbesondere in Laserbasierten Messsystemen und für konfokale Fluoreszenzmikroskope. Die geringe thermische und photochemische Stabilität der meisten für makroskopische Anwendungen konzipierten Fluoreszenzstandards limitiert ihren Einsatz für Mikroskope. Viele eingesetzte Substanzen weisen eine zu große Fluoreszenzanisotropie auf, was eine zusätzliche Fehlerquelle bei der Kalibrierung bedeutet und die Verwendung von Polarisatoren erfordert. Im Allgemeinen sind die angegebenen Spektren nicht rückführbar, Angaben zur Messunsicherheit fehlen und nur in Ausnahmefällen (Chininsulfatdihydrat) sind die Spektren von einer autorisierten Stelle zertifiziert. Vielfach ist außerdem die Charakterisierung der anwendungsrelevanten spektroskopischen Eigenschaften unvollständig und Angaben zur Farbstoffreinheit fehlen in den meisten Fällen.

Ein statistischer Ansatz zur Verknüpfung von Teilkorrekturfunktionen unterschiedlicher Farbstoffstandards zu einer Gesamtkorrekturfunktion unter Anwendung einer Zählratenstatistik (Poisson-Statistik) wird von J.A. Gardecki und M. Maroncelli (Appl. Spectrosc. 1998, 52 1179) beschrieben. Die dort verwendeten Fluoreszenzstandards weisen teilweise die oben beschriebenen Unzulänglichkeiten auf, wie z.B. steile und strukturierte Bandenverläufe ($\alpha$-NPO), unzureichende Photostabilität in Lösung (Tryptophan, Coumarin 102) oder eine zu hohe Fluoreszenzanisotropie (LDS 751).

Neben dem ungedeckten Bedarf geeigneter Farbstoffstandards sowohl zur spektralen als auch zur quantitativen Kalibrierung vom Photolumineszenzmesssystemen bestehen im Falle konfokaler spektraler Imagingsysteme weitere Hindernisse bei der Gerätecharakterisierung. Insbesondere führen unterschiedliche Fokuseinstellungen verschiedener

Anwender dazu, dass die Messung in unterschiedlichen, nicht definierten Probentiefen erfolgt. Dies führt zu kaum reproduzierbaren und artefaktischen spektralen Einflüssen, die einerseits durch Wandeffekte des Gefäßes und andererseits durch innere Auslöscheffekte des Farbstoffs hervorgerufen werden. Ein weiteres Problem in Mikroskopsystemen stellen die aufgrund der Laseranregung sehr hohen Anregungslichtintensitäten dar, welche die photochemische Degradation des Farbstoffs im Messvolumen beschleunigen uns somit zu lokalen "Ausbleicheffekten" führen. Ein bekanntes Behältersystem mit einem Mikroflusssystem zur lichtmikroskopischen und spektroskopischen Untersuchung chemischer oder biologischer Proben ist beispielsweise aus WO 03/029788 A2 oder US 2002/0092973 A1 bekannt, das jedoch das Problem der nicht reproduzierbaren Fokussierung nicht löst und auch nicht auf Kalibrierzwecke ausgerichtet ist. Aus US 6,635,487 B1 ist eine Vorrichtung zur Kalibrierung von Fluoreszenzmesssystemen mit mikrofluidischen Probenkammern bekannt, die Gebrauch von einem fluoreszierenden Festkörperstandard macht. Eine Fokussierung des Messstrahls erfolgt außerhalb der Probe mit einem Spalt. US 2003/0030797 A beschreibt eine Vorrichtung zur Kalibrierung von Fluoreszenzlesegeräten für Mikrotiterplatten, die Einsätze von festen Fluoreszenzstandards in den Titerplattenkavitäten vorsieht. Die Einsätze bestehen beispielsweise aus einem optischen Quarz- oder Glaskörper, der mit einem fluoreszierenden Material, wie Chininsulfat beschichtet ist. Eine Fokussierhilfe ist nicht vorgesehen.

Der Erfindung liegt daher die Aufgabe zugrunde, eine leicht bedienbare Vorrichtung zur Charakterisierung von Lumineszenzmesssystemen, insbesondere von spektral auflösenden, konfokalen und/oder Weitfeld-Imagingsystemen, zur Verfügung zu stellen, welche eine rückführbare und reproduzierbare Kalibrierung unter Verwendung von Standardlösungen erlaubt.

Diese Aufgabe wird durch eine Kalibriereinrichtung mit den in Anspruch 1 genannten Merkmalen gelöst. Die erfindungsgemäße Kalibriereinrichtung zur Charakterisierung von Lumineszenzmesssystemen, insbesondere von spektral auflösenden, konfokalen und/oder Weitfeld-Imagingsystemen, umfasst

(a) eine Grundplatte, die zumindest einen von einem Fluid durchströmbaren Kanal aufweist, wobei der zumindest eine Kanal als Probenkammer für das Lumineszenzmesssystem ausgebildet ist,

(b) jeweils mindestens ein, mit dem zumindest einen Kanal kommunizierendes Reservoir zur Aufnahme einer Flüssigkeit sowie

(c) zumindest eine in die Grundplatte integrierte Fokussiereinrichtung zur Einstellung eines definierten Messstrahlfokus des zu kalibrierenden Lumineszenzmesssystems mit einer Fokussierfläche, wobei die Fokussierfläche hochebenen mit einem Innenraum des zumindest einen Kanals fluchtet, das heißt in einer Ebene liegt.

Die zumindest eine integrierte Fokussierhilfe erlaubt eine verlässliche und für alle Nutzer identische Fokuseinstellung des Messstrahls (Anregungsstrahls) und damit die Vermessung praktisch identischer beleuchteter Messvolumina innerhalb der Mikrokanäle der Kalibriereinrichtung. Auf diese Weise wird gewährleistet, dass spektrale Einflüsse, die von unterschiedlichen Messtiefen verursacht werden, wie Wandeffekte oder innere Filtereffekte der in den Kanälen befindlichen Lösungen, minimiert und standardisiert werden. Somit werden reproduzierbare und über Geräte- und Laborgrenzen hinaus vergleichbare und rückführbare Messdaten erhalten.

In bevorzugter Ausführung sind zumindest zwei in die Grundplatte integrierte Fokussiereinrichtungen (Fokussierhilfen) vorgesehen, die bevorzugt auf der Grundplatte verteilt, insbesondere an einander gegenüberliegenden Randbereichen der Grundplatte angeordnet sind. Dies ermöglicht eine Erfassung einer Planarität beziehungsweise einer Abweichung von dieser und eine entsprechende Kompensation durch rechnerische Interpolation auf die Messorte der Kalibriermodule.

Die Fokussiereinrichtung kann auf unterschiedliche Weise ausgeführt sein. Grundsätzlich weist sie eine hochebene Fokussierfläche auf, deren Rauheit weit unterhalb der optischen Auflösung des zu kalibrierenden Lumineszenzmesssystems liegt. Hierzu umfasst sie bevorzugt ein hochebenes Substrat, wie etwa einen Wafer aus einem Silizium-Einkristall oder dergleichen, auf dem eine sehr dünne Schicht eines reflektierenden und/oder fluoreszierenden Materials aufgesputtert ist. Hierfür eignet sich beispielsweise eine dünne Metallschicht (z.B. Chromschicht) mit einer Schichtdicke zwischen 10 und 100 nm, insbesondere zwischen 30 und 50 nm. Alternativ oder zusätzlich kann die Fokussierfläche lumineszierend, insbesondere fluoreszierend ausgebildet sein. Neben üblichen fluoreszierenden Materialien sind insbesondere fluoreszierende Quantumdots bevorzugt, die sich durch eine besonders hohe Stabilität auszeichnen. Besonders bevorzugt werden unterschiedliche fluoreszierende Materialien auf einem oder verschiedenen Wafern eingesetzt, deren unterschiedliche spektrale Eigenschaften typische Anregungs- oder Emissions-Spektralbereich des betreffenden Messsystems abdecken. Auf diese Weise erlaubt die Fokussiereinrichtung unter anderem eine Bestimmung der Parfokalität (hierunter versteht man ein über die Objektivabgleichlänge erzeugte identische Schärfeneinstellung) eines verwendeten Objektivs des Messsystems und einen parfokalen Bildabgleich mittels rechnerischer Methoden oder durch die Verwendung von Hilfslinsen im Mikroskop.

Durch die Reservoire, von denen in bevorzugter Ausführung jeweils zwei, beidseitig mit einem Kanal verbunden vorgesehen sind, wird eine gute Langzeitstabilität gewährleistet, da Moleküle im Messvolumen, die infolge der in der Fluoreszenzmikroskopie typischerweise eingesetzten sehr hohen Strahlenintensität am Probenort (Laseranregung)

durch thermische und/oder photochemische Prozesse zersetzt werden, durch Diffusionsprozesse aus den Reservoiren kontinuierlich ersetzt werden. Hierfür sind die Volumina der Reservoire sowie die Abmessungen der Kanäle so gewählt, dass ausreichende Diffusionsgeschwindigkeiten vorliegen. Zudem ist vorzugsweise das durch die Kanal/Reservoir-Einheit ausgebildete Mikroflusssystem vollständig luftdicht verschließbar, um Oxidationsprozesse der Proben und Verdunstung des verwendeten Lösungsmittels zu verhindern.

Das Kalibriersystem wird hinsichtlich seiner Abmessungen (Größe der Grundplatte, Durchmesser und Abstand der (Mikro)Kanäle, Größe des Reservoirs) und seinem Material (Glas, Quarzglas, Kunststoff) sowie der Ausgestaltung und Positionierung der Fokussiereinrichtung(en) an das zu kalibrierende Lumineszenzmesssystem angepasst, beispielsweise an ein spektral auflösendes Weitfeld-Imagingsystem oder ein spektral auflösendes konfokales Fluoreszenzmikroskop. Für Applikationen im Zusammenhang mit Kalibrierungen von spektral auflösenden konfokalen Fluoreszenzmikroskopen wird durch die Integration der Fokussierhilfen, etwa an beiden Seiten einer Kalibriereinrichtung mit typischen Dimensionen von Mikroskopobjektträgern erreicht, dass jeder Anwender nahezu das gleiche beleuchtete Volumen der Farbstofflösungen vermisst, was eine vergleichbare und reproduzierbare Gerätecharakterisierung und der damit erhaltenen Messdaten unter applikationsrelevanten, also probenspezifischen Messbedingungen ermöglicht.

Nach einer bevorzugten Ausgestaltung der Erfindung ist der zumindest eine Kanal und/oder das mindestens eine diesem Kanal zugeordnete Reservoir mit einem Fluoreszenzstandard zumindest teilweise befüllt. In noch weiter bevorzugter Ausführung weist die Grundplatte eine Mehrzahl von Kanälen und diesen zugeordneten Reservoiren auf, wobei die Kanäle und/oder die zugeordneten Reservoire mit unterschiedlichen Fluoreszenzstandards zumindest teilweise befüllt sind.

Grundsätzlich kann die erfindungsgemäße Kalibriereinrichtung applikationsadaptiert mit verschiedenen problemspezifisch ausgewählten, zuvor spektroskopisch charakterisierten Farbstofflösungen befüllt sein. Dabei ist besonders vorteilhaft vorgesehen, dass die Fluoreszenzstandards derart gewählt sind, dass ihre spektral korrigierten Fluoreszenzspektren zusammen einen vorgegebenen Spektralbereich mit einer vorgegebenen Mindestintensität abdecken, so dass die Verrechnung der von diesen gemessenen Spektren mit den entsprechenden korrigierten, vorzugsweise zertifizierten Spektren eine Gesamtkorrekturfunktion liefert, die eine Kalibrierung des Messsystems für einen weiten Spektralbereich erlaubt. Die Ermittlung einer Gesamtkorrekturfunktion erfolgt im Wesentlichen durch Messung der Fluoreszenzspektren der Fluoreszenzstandards, Berechnung von Teilkorrekturfunktionen als Quotienten der gemessenen und den entsprechenden korrigierten (idealerweise zertifizierten) Fluoreszenzspektren und Verknüpfung der Teilkorrekturfunktionen zu einer Gesamtkorrekturfunktion unter Verwendung statistischer Methoden. Ein besonders bevorzugtes Verfahren zur Berechnung einer solchen Gesamtkorrekturfunktion sowie bevorzugte Sets derart aufeinander abgestimmter Fluoreszenzstandards sind in der älteren Anmeldung DE 10 2004 044 717.9 beschrieben.

Besonders bevorzugte Fluoreszenzstandards für die Bestimmung der relativen spektralen Empfindlichkeit von Detektionssystemen (Emission oder Anregung) sind in nachfolgend näher erläuterter Weise hinsichtlich verschiedener Eigenschaften der Substanzen und ihrer spektralen Eigenschaften aufeinander abgestimmt. Hierzu zählt zunächst eine einzuhaltende relative Mindestintensität an den einzelnen Überschneidungswellenlängen jeweils zwei spektral benachbarter Fluoreszenzbanden zweier Standards. Diese Mindestintensität beträgt mindestens 20 % der maximalen Intensität der Banden, insbesondere von mindestens 25 %, vorzugsweise mit mindestens 30 % der maximalen Bandenintensität. In konkreten Ausführungsbeispielen liegen diese Intensitäten sogar bei etwa 40 % der maximalen Bandenintensität. Die vorgenannten Werte beziehen sich auf den UV/vis-Spektralbereich mit $\lambda \leq 700$ nm. Da im NIR-Bereich mit $\lambda$, > 700 nm grundsätzlich geringere Quantenausbeuten und damit geringere absolute Intensitäten vorliegen, können in diesem Bereich geringere Mindestintensitäten an den Überschneidungspunkten von mindestens 10 %, insbesondere bei etwa 15 %, vorzugsweise etwa 25 % der Maximalintensität der jeweiligen flankierenden Bande zugelassen werden. Es wird somit sichergestellt, dass im gesamten Spektralbereich ausschließlich hohe Intensitäten in die Statistik zur Berechnung einer Gesamtkorrekturfunktion für das zu kalibrierende Messsystem einfließen, wodurch sich eine hohe Zuverlässigkeit bzw. geringe Unsicherheit ergibt. Unter Zugrundelegung der geforderten Mindestintensitäten decken die aufeinander abgestimmten Fluoreszenzstandards vorzugsweise einen vorgegebenen Spektralbereich im UV/vis/NIR-Bereich zumindest teilweise ab. Insbesondere überdeckt ein Set von Emissionsstandards für eine Emissionskorrektur einen Bereich von 310 bis 730 nm ab, bevorzugt von 300 bis 950 nm, wobei für Mikroskopieanwendungen insbesondere ein Bereich von 400 bis 800 nm relevant ist. Ein vorteilhaftes Set von Anregungsstandards für eine Anregungskorrektur einen Bereich von 280 bis 600 nm, bevorzugt von 240 bis 800 nm.

Gemäß einer weiteren bevorzugten Ausgestaltung der Erfindung weisen sämtliche Fluoreszenzstandards Fluoreszenzbanden im UV/vis-Spektralbereich mit $\lambda \leq 700$ nm mit einer Halbwertsbreite (FWHM) zumindest von 1600 $cm^{-1}$, insbesondere von zumindest 2000 $cm^{-1}$, vorzugsweise von mindestens 2400 $cm^{-1}$ auf und im NIR-Bereich mit $\lambda > 700$ nm von mindestens 1200 $cm^{-1}$ insbesondere mindestens 1400 $cm^{-1}$. Die erfindungsgemäße Zusammenstellung des (bzw. der) Kits versetzt einen Benutzer in die Lage, eine Kalibrierung des Messsystems zuverlässig, reproduzierbar und preiswert durchzuführen. Insbesondere die erfindungsgemäße Abstimmung der einzelnen Fluoreszenzstandards, insbesondere ihrer Halbwertsbreiten sowie die geforderte Mindestintensität an den Überschneidungswellenlängen, ermöglicht die Erzeugung einer Gesamtkorrekturfunktion für das Gerät über einen weiten Spektralbereich in bislang nicht

verfügbarer Qualität.

Neben der geforderten Mindestintensität der Fluoreszenzspektren an den Überschneidungspunkten und der Mindesthalbwertsbreite erfüllen nach weiteren Ausgestaltungen der Erfindung sämtliche Fluoreszenzstandards weitere im Folgenden beschriebene Anforderungen. Nach einer besonders vorteilhaften Ausgestaltung der Erfindung sind alle Farbstoffstandards so gewählt, dass ihre Lumineszenzbanden einen glatten und unstrukturierten Bandenverlauf aufweisen, d.h. bei einer spektralen Auflösung von 1 nm weisen die Banden nur ein Maximum, keine Schultern sowie einen stetigen Bandenverlauf auf. Ebenso wie die geforderte minimale Halbwertsbreite, die mit einer flachen Flankensteilheit der Banden einhergeht, garantiert auch der unstrukturierte und glatte Verlauf der Banden eine bestmögliche Unabhängigkeit der gemessenen Spektren von den Messbedingungen sowie der Geräteausstattung bzw. den Parametereinstellungen des verwendeten Spektrometers, insbesondere von Monochromatorbandpass und -spaltbreite des Messkanals. Die erfindungsgemäßen Bandencharakteristika führen somit zu einer Erhöhung der Kalibriersicherheit.

Es ist ferner vorgesehen, sämtliche Farbstoffstandards mit einer Reinheit von mindestens 98 %, vorzugsweise von mindestens 99,5 % bereitzustellen. Ferner sollte jeder Farbstoffstandard eine geringe Überlappung seiner Anregungs- und Emissionsbande aufweisen. Insbesondere besteht ein bevorzugter Abstand zwischen Anregungs- und Emissionsbanden von mindestens 2000 $cm^{-1}$, insbesondere mindestens 2400 $cm^{-1}$ und im Idealfall von mindestens 2800 $cm^{-1}$. Die Farbstoffstandards sollten darüber hinaus in einem Temperaturbereich von 20 bis 30 °C eine Anisotropie der Fluoreszenz im zu verwendenden Lösungsmittel im UV/vis-Spektralbereich mit $\lambda \leq 700$ nm von höchstens 0,05 und vorzugsweise von höchstens 0,04 aufweisen, im NIR-Spektralbereich von höchstens 0,15 und vorzugsweise von höchstens 0,07. Weitere Fehlerquellen der Kalibrierung werden dadurch vermieden, dass die vorgeschlagenen Farbstoffstandards im typischen Messtemperaturbereich von 20 bis 30 °C keine oder nur eine geringe Temperaturabhängigkeit der spektralen Form der Fluoreszenzspektren aufweisen. Die Farbstoffe sind ferner durch eine hohe thermische und photochemische Stabilität ihrer Reinstoffe und auch ihrer Lösungen gekennzeichnet. Weiterhin ist ein Homogenität der Standardlösungen wichtig, die bis zur maximalen Ortsauflösung des Messsystems ortsunabhängige Fluoreszenzspektren garantiert. Schließlich ist gewährleistet, dass die Farbstoffstandards unter für statische Photolumineszenzmessungen typischen Mess- und Anregungsbedingungen keine Photoprodukte bilden, die eigene spektrale Beiträge im relevanten Spektralbereich aufweisen. Insbesondere weisen sie einen maximal 10%igen, vorzugsweise maximal 2%igen Abbau der Fluoreszenzbanden bei 5-stündiger Einstrahlung des Lichts einer 150 W-Xenon-Höchstdrucklampe im Bereich des längstwelligen Absorptionsmaximums bei einer Breite des Bandpasses von ca. 15 nm auf, so dass die thermische und photochemische Stabilität ausreichend für die geplanten Anwendungen ist. Auf der anderen Seite sorgen die Reservoire und die damit verbundenen Diffusionsprozesse - im Falle dennoch auftretender photochemischer Prozesse - für einen Ersatz der betroffenen Moleküle durch unzerstörte Farbstoffmoleküle im Messvolumen. Insbesondere die Gesamtheit der genannten spektroskopischen und chemischen Eigenschaften der Fluoreszenzstandards gewährleistet eine hohe Kalibriersicherheit und eine Rückführbarkeit nach EN ISO/IEC 17025.

Die Kalibriereinrichtung kann grundsätzlich eine Mehrzahl unterschiedlicher Emissionsstandards (und vorzugsweise deren spektral korrigierte Emissionsspektren) zur Erstellung einer Gesamtkorrekturfunktion für den Emissionskanal (Emissionskorrekturfunktion) enthalten als auch eine Mehrzahl unterschiedlicher Anregungsstandards (und vorzugsweise deren korrigierte Anregungsspektren) zur Erstellung einer Gesamtkorrekturfunktion für den Anregungskanal (Anregungskorrekturfunktion) umfassen.

Ein Set bevorzugter Emissionsstandards enthält insbesondere aus der Gruppe der Biphenyl-, Naphthalin-, Coumarin-, Oxazin-, Merocyanin-, Hemicyanin- und Styryl-Derivate ausgewählte Verbindungen. Als Anregungsstandards werden bevorzugt Derivate aus der Gruppe enthaltend Biphenyl-, Terphenyl-, Oxadiazol-, Coumarin-, Oxazin-, Merocyanin-, Hemicyanin- und Styryl-Derivate ausgewählt. Nachfolgend werden einige explizite Emissions- und oder Anregungsstandards aufgeführt, die den vorstehend genannten Kriterien entsprechen.

Ein erster bevorzugter Emissions- und/oder Anregungsstandard ist ein Biphenylderivat nach der allgemeinen Formel 1

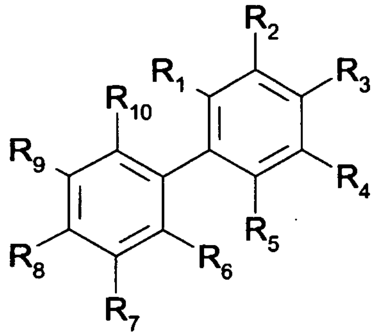

(1),

worin die Reste $R_1$ bis $R_{10}$ unabhängig voneinander einen Wasserstoff-, einen Alkyl- oder Alkoxyrest oder teilweise in Kombination miteinander einen anellierten, gesättigten, hetero- oder homonuklearen Ring bedeuten. Vorzugsweise bedeuten $R_1$ und $R_6$ jeweils einen Alkoxyrest und die übrigen Reste unabhängig voneinander einen Wasserstoff- oder Alkylrest, wobei die Alkoxy- und Alkylgruppen unabhängig voneinander cyclisch oder acyclisch, verzweigt oder unverzweigt sind. Besonders bevorzugt bedeuten $R_1$ und $R_6$ jeweils ein Methoxyrest und die übrigen Reste jeweils ein Wasserstoffrest. Diese Verbindung wird bevorzugt als Emissionsstandard verwendet und weist z. B. in Ethanol eine Emissionsbande von 290 bis 410 nm bei einer Anregungswellenlänge bei 280 nm auf. Die Halbwertsbreite beträgt etwa 4250 $cm^{-1}$ und der Abstand zwischen Anregungs- und Emissionsmaximum ca. 5410 $cm^{-1}$.

Ein zweiter bevorzugter Emissions- und/oder Anregungsstandard ist ein Naphthalinderivat nach der allgemeinen Formel 2

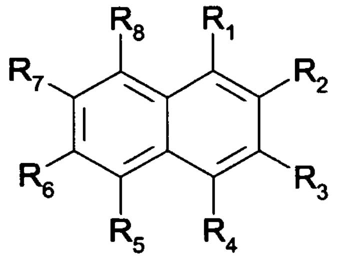

(2),

worin die Reste $R_1$ bis $R_8$ unabhängig voneinander einen Wasserstoff- oder Alkoxyrest oder teilweise in Kombination miteinander einen anellierten, gesättigten, hetero- oder homonuklearen Ring bedeuten. Bevorzugt ist mindestens einer der zwei Naphthalinringe mit zwei Alkoxyresten in einer Spiegelsymmetrieanordnung substituiert (beispielsweise $R_1$ und $R_4$ und/oder $R_2$ und $R_3$) und die übrigen Reste sind jeweils Wasserstoffe, wobei die Alkoxygruppen acyclisch, verzweigt oder unverzweigt sind und keine Wasserstoffreste in β-Position relativ zu dem Ethersauerstoffatom aufweisen. Besonders bevorzugt sind $R_1$ und $R_4$ unabhängig voneinander ein Methoxy- oder Neopentyloxyrest und die übrigen Reste jeweils Wasserstoffreste. Diese Verbindungen werden bevorzugt als Emissionsstandard verwendet und weisen z. B. in Ethanol eine Emissionsbande bei etwa 330 bis 500 nm bei einer Anregungswellenlänge bei 320 nm auf. Die Halbwertsbreite beträgt 4400 $cm^{-1}$ und der Abstand zwischen Anregungs- und Emissionsmaximum ca. 4930 $cm^{-1}$

Ein dritter bevorzugter Emissions- und/oder Anregungsstandard ist ein Cumarinderivat nach der allgemeinen Formel 3

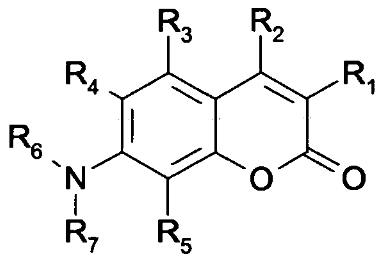

(3),

worin die Reste $R_1$ bis $R_7$ unabhängig voneinander einen Wasserstoff- oder einen unsubstituierten oder substituierten Alkylrest oder teilweise in Kombination miteinander einen anellierten, gesättigten, homonuklearen Ring bedeuten. Insbesondere bedeuten $R_1$ und $R_2$ unabhängig voneinander einen Wasserstoff- oder einen unsubstituierten oder substituierten Alkylrest oder einen anellierten, gesättigten, homonuklearen Ring, $R_3$ bis $R_5$ jeweils einen Wasserstoffrest und $R_6$ und $R_7$ unabhängig voneinander einen Wasserstoff- oder Alkylrest. Vorzugsweise sind $R_1$ bis $R_5$ jeweils ein Wasserstoffrest und $R_6$ und $R_7$ jeweils eine Ethylgruppe. Diese Verbindung wird als Emissions- und/oder Anregungsstandard verwendet und weist z. B. in Ethanol eine Emissionsbande bei etwa 400 bis 600 nm bei einer Anregungswellenlänge bei 380 nm auf sowie eine Anregungsbande von 325 bis 430 nm bei einer Detektionswellenlänge von 460 nm. Die Halbwertsbreite der Emissionsbande beträgt etwa 2850 $cm^{-1}$ und der Abstand zwischen Anregungs- und Emissionsmaximum ca. 4340 $cm^{-1}$. Die Anregungsbande hat eine Halbwertsbreite von etwa 3780 $cm^{-1}$.

Ein vierter bevorzugter Emissions- und/oder Anregungsstandard ist ein Cumarinderivat nach der allgemeinen Formel 4

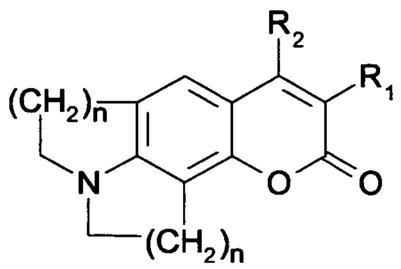

(4),

worin die Reste $R_1$ und $R_2$ unabhängig voneinander einen Wasserstoff- oder einen unsubstituierten oder substituierten Alkylrest oder in Kombination miteinander einen anellierten, gesättigten, homonuklearen Ring bedeuten und n gleich 1 oder 2 ist. Bevorzugt ist $R_1$ ein Wasserstoff, $R_2$ ein unsubstituierter oder substituierter Alkylrest und n jeweils gleich 1 oder 2. Besonders bevorzugt ist $R_1$ Wasserstoff, $R_2$ ein Trifluormethylrest und n jeweils gleich 2. Diese Verbindung wird als Emissions- und/oder Anregungsstandard verwendet und weist z. B. in Ethanol eine Emissionsbande bei etwa 460 bis 700 nm bei einer Anregungswellenlänge bei 420 nm auf sowie eine Anregungsbande von 330 bis 490 nm bei einer Detektionswellenlänge von 530 nm. Die Halbwertsbreite der Emissionsbande beträgt 2890 $cm^1$ und der Abstand zwischen Anregungs- und Emissionsmaximum ca. 4940 $cm^{-1}$. Die Anregungsbande hat eine Halbwertsbreite von etwa 4010 $cm^{-1}$.

Ein fünfter Emissions- und/oder Anregungsstandard ist ein Oxazinderivat, insbesondere ein 3H-Phenoxazin-5-onderivat nach der allgemeinen Formel 5

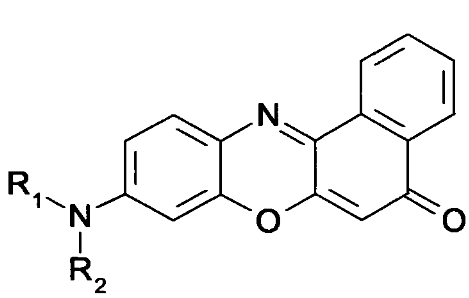

(5),

worin die Reste $R_1$ und $R_2$ unabhängig voneinander einen Wasserstoff- oder einen unsubstituierten oder substituierten

n- oder iso-Alkylrest bedeuten. Bevorzugt bedeuten $R_1$ und $R_2$ jeweils einen unsubstituierten, unverzweigten Alkylrest, insbesondere jeweils einen Ethylrest. Die Verbindung wird als Emissions- und/oder Anregungsstandard verwendet und weist z.B. in Ethanol eine Emissionsbande bei etwa 570 bis 750 nm bei einer Anregungswellenlänge von 550 nm auf sowie eine Anregungsbande bei 440 bis 630 nm bei einer Detektionswellenlänge von 630 nm. Die Halbwertsbreite der Emissionsbande beträgt 1630 $cm^{-1}$ und der Abstand zwischen Anregungs- und Emissionsmaximum ca. 2440 $cm^{-1}$. Die Anregungsbande hat eine Halbwertsbreite von etwa 2960 $cm^{-1}$.

Ein sechster Emissions- und/oder Anregungsstandard ist ein Merocyaninderivat nach der allgemeinen Formel 6

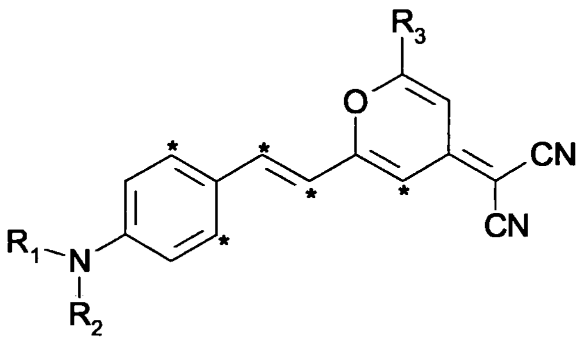

**(6),**

worin $R_1$, $R_2$ und $R_3$ unabhängig voneinander einen Wasserstoff- oder einen unsubstituierten oder substituierten n- oder iso-Alkylrest bedeuten und einen Wasserstoff- oder einen unsubstituierten oder substituierten Alkylrest bedeuten. Die mit einem Stern gekennzeichneten C-Atome können unabhängig voneinander über eine gesättigte C2- oder C3-Brücke miteinander verbrückt sein, sofern sie sich in 1,3-Stellung zueinander befinden. Bevorzugt sind $R_1$ bis $R_3$ jeweils ein Methylrest und es ist keine Verbrückung vorhanden. Diese Verbindung wird bevorzugt als Emissionsstandard verwendet und weist z. B. in Ethanol eine Emissionsbande bei etwa 530 bis 750 nm bei einer Anregungswellenlänge bei 460 nm auf. In Aceton beträgt die Halbwertsbreite der Emissionsbande 2323 $cm^{-1}$ und der Abstand zwischen Anregung ($\lambda_{ex}$ = 462 nm) und Emissionsmaximum ($\lambda_{max}$ = 626 nm) 5670 $cm^{-1}$.

Ein weiterer Emissions- und/oder Anregungsstandard ist ein Styrylderivat, insbesondere ein Hemicyaninderivat nach der allgemeinen Formel 7

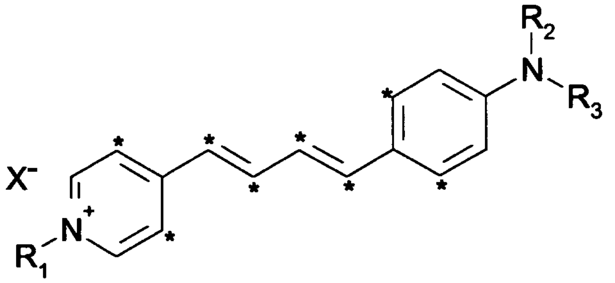

**(7),**

worin $R_1$ bis $R_3$ unabhängig voneinander einen Wasserstoff- oder einen unsubstituierten oder substituierten n- oder iso-Alkylrest und X- ein beliebiges Anion bedeuten. Die mit einem Stern gekennzeichneten C-Atome können unabhängig voneinander über eine gesättigte C2- oder C3-Brücke miteinander verbrückt sein, sofern sie sich in 1,3-Stellung zueinander befinden. Bevorzugt sind $R_1$ ein Ethylrest, $R_2$ und $R_3$ jeweils ein Methylrest und X- ein Perchlorat-Anion und es ist kein verbrückender Ring vorhanden. Diese Verbindung wird bevorzugt als Emissionsstandard verwendet und weist eine Emissionsbande bei etwa 600 bis 800 nm bei einer Anregungswellenlänge bei 500 nm auf. In Aceton beträgt die Halbwertsbreite der Emissionsbande 2008 $cm^{-1}$ und der Abstand zwischen Anregung ($\lambda_{ex}$ = 492 nm) und Emissionsmaximum ($\lambda_{max}$ = 719 nm) 6417 $cm^{-1}$.

Ein weiterer Emissions- und/oder Anregungsstandard ist ein Styrylderivat, insbesondere ein Hemicyaninderivat nach der allgemeinen Formel 8

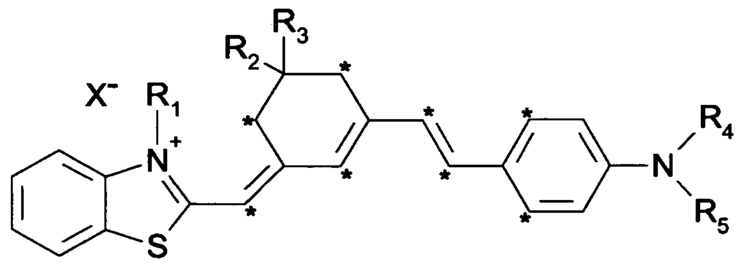

(8),

worin die Reste $R_1$ bis $R_5$ unabhängig voneinander einen Wasserstoff- oder einen unsubstituierten oder substituierten n- oder iso-Alkylrest und $X^-$ ein beliebiges Anion bedeuten. Die mit einem Stern gekennzeichneten C-Atome können unabhängig voneinander über eine gesättigte C2- oder C3-Brücke miteinander verbrückt sein, sofern sie sich in 1,3-Stellung zueinander befinden. Bevorzugt sind $R_1$ bis $R_5$ jeweils eine Methylgruppe und $X^-$ ein Perchlorat-Anion. Die Verbindung wird bevorzugt als Emissionsstandard verwendet und weist eine Emissionsbande bei etwa 700 bis 920 nm bei einer Anregungswellenlänge bei 580 nm auf. In Aceton beträgt die Halbwertsbreite der Emissionsbande 1460 $cm^{-1}$ und der Abstand zwischen Anregung ($\lambda_{ex}$ = 564 nm) und Emissionsmaximum ($\lambda_{max}$ = 810 nm) 5380 $cm^{-1}$.

Ein weiterer bevorzugter Emissions- und/oder Anregungsstandard ist p-Terphenyl nach der allgemeinen Formel 9

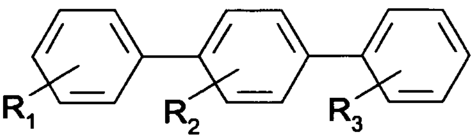

(9),

worin $R_1$ bis $R_3$ unabhängig voneinander Wasserstoff oder ein Alkyl- oder Alkoxyrest bedeuten, vorzugsweise Wasserstoff. Die Verbindung wird bevorzugt als Anregungsstandard verwendet und weist z. B. in Ethanol eine Anregungsbande bei etwa 240 bis 320 nm auf, wenn die Fluoreszenz bei 335 nm detektiert wird. Die Halbwertsbreite der Anregungsbande beträgt 5580 $cm^{-1}$.

Ein weiterer bevorzugter Emissions- und/oder Anregungsstandard ist ein 1,3,4-Oxadiazolderivat nach Formel 10

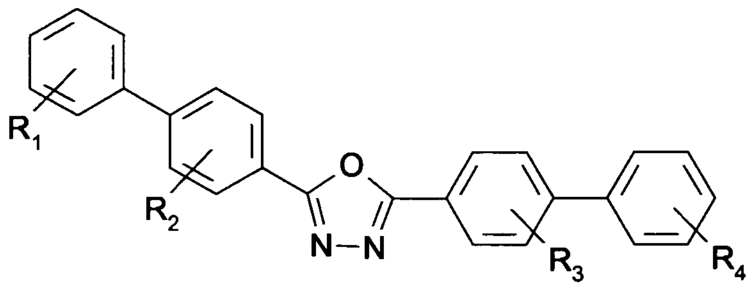

(10),

worin $R_1$ bis $R_4$ unabhängig voneinander Wasserstoff oder ein Alkyl- oder Alkoxyrest bedeuten, vorzugsweise jeweils Wasserstoff. Diese Verbindung wird bevorzugt als Anregungsstandard verwendet und weist z. B. in Acetonitril eine Anregungsbande bei etwa 275 bis 350 nm und ein Emissionsmaximum um 373 nm auf. Die Halbwertsbreite der Anregungsbande beträgt 4880 $cm^{-1}$.

Eine Kalibriereinrichtung gemäß einer besonders bevorzugten Ausgestaltung umfasst ein Set von Emissionsstandards, der jeweils einen Fluoreszenzstandard nach den allgemeinen Formeln 1 bis 5 enthält. Ein solches Set deckt den Spektralbereich von etwa 310 bis 730 nm ab. Zusätzlich kann dieses Set für den Emissionskanal mindestens einen weiteren Emissionsstandard, ausgewählt aus den allgemeinen Formeln 6, 7 und 8 umfassen, um somit die Erstellung einer Gesamtkorrekturfunktion für einen Bereich von ca. 310 bis 950 nm zu ermöglichen.

Eine besonders bevorzugte Kalibriereinrichtung zur Erstellung einer Gesamtkorrekturfunktion für den Anregungskanal umfasst ein Set von Anregungsstandards, das jeweils einen Anregungsstandard nach den allgemeinen

Formeln 3, 4, 5, 9 und 10 enthält.

Ein weiterer Aspekt der vorliegenden Erfindung betrifft ein Kit, das eine erfindungsgemäße (unbefüllte) Kalibriereinrichtung gemäß der vorstehenden Beschreibung sowie ein Set unterschiedlicher Fluoreszenzstandards als Lösung oder Feststoff umfasst. Vorzugsweise weist das Set von Fluoreszenzstandards die vorstehend erläuterten Eigenschaften auf und ist aus den vorstehend beschriebenen Substanzen gewählt. Nach einer weiteren bevorzugten Ausgestaltung umfasst das Kit ferner korrigierte Fluoreszenzspektren der im Kit enthaltenen Fluoreszenzstandards in computerlesbarer Form und/oder eine Angabe einer Internetseite, auf welcher die korrigierten Fluoreszenzspektren abrufbar sind. Es ist ferner vorteilhaft vorgesehen, dass das Kit darüber hinaus einen Programmalgorithmus zur Berechnung einer Gesamtkorrekturfunktion für einen vorgegebenen Spektralbereich enthält und/oder eine Angabe einer Internetseite, auf welcher das Programm abrufbar ist. Ein geeigneter Algorithmus ist etwa in der älteren Anmeldung DE 10 2004 044 717.9 beschrieben. Das erfindungsgemäße Kit versetzt einen Benutzer in die Lage, durch einfaches Befolgen einer Bedienungsanleitung eine bequeme und einfache Kalibrierung des Messsystems durchzuführen.

Die erfindungsgemäße Kalibriereinrichtung bzw. das Kit werden bevorzugt zur relativen spektralen Kalibrierung von Photolumineszenzmessgeräten, insbesondere zur Bestimmung gerätespezifischer spektraler Beiträge zu Messdaten verwendet. Daneben kann die Kalibriereinrichtung bzw. das Kit aber auch als Fluoreszenzquantenausbeutestandard zur Bestimmung von relativen Fluoreszenzquantenausbeuten im UV/vis/NIR-Spektralbereich verwendet werden, das heißt zur quantitativen Kalibrierung der Intensitäten. Dabei ist die Fluoreszenzquantenausbeute definiert als das Verhältnis der von einer Probe emittierten Anzahl von Photonen zu der von der Probe absorbierten Photonenanzahl. Ferner ist denkbar, das Kit bzw. seine Farbstoffstandards zur Bestimmung des Linearitätsbereichs eines Detektionssystems eines Photolumineszenzmesssystems einzusetzen. Dabei wird der Bereich eines Detektors bestimmt, in dem die von diesem angezeigte Intensität linear mit der eingestrahlten Intensität zunimmt, das heißt in dem eine zuverlässige quantitative Aussage über eine Konzentration eines Chromophors in der Probe möglich ist. In diesem Fall werden die Kanäle der Kalibriereinrichtung mit verschiedenen Konzentrationen von ein und demselben Fluoreszenzstandard befüllt. Darüber hinaus eignet sich die Kalibriereinrichtung zur Charakterisierung der Langzeitstabilität und von tagesabhängigen Performanceschwankungen hinsichtlich der Messintensitäten des Messsystems ("day-to-day instrument performance") sowie zum Vergleich von Lumineszenzmesssystemen untereinander. Weitere Anwendungsgebiete sind die Charakterisierung der Homogenität der Ausleuchtung bei verschiedenen Anregungs- und Emissionswellenlängen, die Vergleichbarkeit von Lumineszenzdaten und - intensitäten, die Ermittlung der relativen spektralen Beleuchtungsstärke am Probenort sowie spektrales Unmixing und die Überprüfung von für diese Zwecke eingesetzte Auswertungssoftware.

Die Kalibriereinrichtung kann je nach Format und Größe sowie Anordnung der Kanalstrukturen zur Charakterisierung vieler verschiedener Typen von Photolumineszenzmesssystemen eingesetzt werden, beispielsweise konfokalen spektral auflösenden Imagingsystemen, wie konfokalen Fluoreszenzmikroskopen und Mikroarrayscannern, widefield Fluoreszenzmikroskopen sowie Ramanspektrometern und Ramanmikroskopen. Sie kann für verschiedene Messgeometrien eingesetzt werden. Durch Wahl der eingefüllten Farbstoffe und Farbstoffkombinationen ist eine weite Problemanpassung möglich, z.B. an gerätespezifische Anregungswellenlängen und detektierbare Emissionsspektralbereiche sowie an unterschiedliche Signalgrößen bzw. Fluoreszenzintensitäten oder den Intensitätsverhältnissen. Die erfindungsgemäße Kalibriereinrichtung ist auf die Handhabung durch technisches Personal zugeschnitten.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:

Figur 1A Unteransicht einer erfindungsgemäßen Kalibriereinrichtung;

Figur 1B Oberansicht der erfindungsgemäßen Kalibriereinrichtung aus Figur 1A;

Figur 1C Längsschnitt der erfindungsgemäßen Kalibriereinrichtung gemäß der Schnittansicht in Figur 1B;

Figur 1D Querschnitt der erfindungsgemäßen Kalibriereinrichtung gemäß der Schnittansicht in Figur 1C; und

Figur 2 korrigierte (zertifizierte) und gemessene Emissionsspektren von Farbstoffstandards A bis E sowie daraus berechnete Teilkorrekturfunktionen und Gesamtkorrekturfunktion.

Figuren 1A bis 1B zeigen verschiedene Ansichten einer insgesamt mit 10 bezeichneten erfindungsgemäßen Kalibriereinrichtung gemäß einer vorteilhaften Ausgestaltung der Erfindung zur Kalibrierung insbesondere eines konfokalen Fluoreszenzmikroskops. Die Kalibriereinrichtung 10 umfasst eine flächige Grundplatte 12 mit einer Unterseite 14 und einer Oberseite 16. Die Grundplatte 12 kann aus einem geeigneten Polymer, Glas oder Quarzglas bestehen und ein- oder mehrstückig, auch unter Verwendung unterschiedlicher Materialien hergestellt sein. Die Abmessungen der

Grundplatte 12 betragen gemäß dem gezeigten Beispiel 76,0 mm X 26,0 mm und entsprechen damit Standardabmessungen von Objektträgern für Mikroskope.

Die Kalibriereinrichtung 10 weist eine Mehrzahl von (hier fünf) Kanälen 18 auf, welche die Grundplatte 12 parallel zur Unter- und Oberseite 14, 16 sowie zu den seitlichen Begrenzungen der Grundplatte 12 durchsetzen und in einem definierten äquidistanten Abstand zueinander angeordnet sind. Sie verlaufen nahe an derjenigen Grundfläche, welche dem Messstrahl des zu kalibrierenden Lumineszenzmesssystems zugewandt ist, hier der Unterseite 14. Aus herstellungstechnischen Gründen können die Kanäle 18 auch als Furchen in die Grundplatte 12 eingearbeitet und durch eine optisch durchlässige, auf die Grundplatte 12 aufgeklebte oder aufgeschweißte Folie verschlossen sein. Wie am besten aus Figur 1D hervorgeht, treten die Kanäle 18 beidseitig auf die Oberfläche 6 der Grundplatte 12 aus, wo sie in Reservoire 20 münden. Jedem Kanal 18 sind somit zwei, auf der Oberseite 16 der Grundplatte 12 angeordnete Reservoire 20 zugeordnet, die beispielsweise als Hohlzylinder oder dergleichen ausgestaltet sind. Die Reservoire 20 sind luftdicht verschließbar, beispielsweise mit hier nicht dargestellten, aufsteckbaren Deckeln.

Die Innenräume der Kanäle 18 bilden die eigentlichen Proben- beziehungsweise Messkammern für das Lumineszenzmesssystemen aus, das heißt zur Messung der Lumineszenzeigenschaften einer in einem Kanal 18 befindlichen Probe wird der Messstrahl in den Innenraum des Kanals 18 fokussiert. Hierfür weisen die Kanäle 18 bevorzugt eine rechteckigen Querschnitt (Figur 1 C) beispielweise mit einer Höhe von 0,4 mm, einer Breite von 3,8 mm und einer Länge von 17,0 mm auf. Die Durchmesser der (Mikro)Kanäle 18 und die Reservoirgröße sind so bemessen, dass über Diffusionsprozesse ständig neue Farbstoffmoleküle an den Messort gelangen und somit photochemisch oder thermisch zersetzte Moleküle ersetzen.

Die Kanäle 18 sowie die mit diesen kommunizierende Reservoire 20 sind mit Lösungen unterschiedlicher Fluoreszenzfarbstoffstandards 22 gefüllt - bildlich angedeutet durch unterschiedliche Graustufen der Lösungen. Dabei bilden die in jeweils zwei Reservoire 20 stehende Flüssigkeitssäulen ein über einen Kanal 18 hydrostatisch kommunizierendes System. Bei den Fluoreszenzstandards 22 handelt es sich beispielsweise um ein Set aufeinander abgestimmter Emissionsstandards zur Kalibrierung des Emissionskanals des Messsystems oder aber aufeinander abgestimmter Anregungsstandards zur Kalibrierung des Anregungskanals des Geräts. Die Eigenschaften der bevorzugten Fluoreszenzstandards 22 wird im Zusammenhang mit Figur 2 erläutert.

Auf der Unterseite 14 der Grundplatte 12 sind in entsprechende Vertiefungen zwei Fokussiereinrichtungen 24 eingelassen, die in bevorzugter Ausführung an einander gegenüberliegenden Randbereichen der Grundplatte 12 angeordnet sind. Abweichend von der dargestellten Ausführung können auch mehr als zwei Fokussiereinrichtungen 24 auf der Grundplatte 12 verteilt vorgesehen sein oder nur eine. Im Falle von nur einer Fokussiereinrichtung 24 ist diese vorteilhaft im mittleren Bereich der Grundplatte 12 angeordnet. Die Fokussiereinrichtungen 24 weisen jeweils eine Fokussierfläche 26 auf, die parallel zu den Kanälen 18 verlaufen und mit den Innenräumen der Kanäle 18 fluchten (Figur 1C). Mit anderen Worten liegen die Fokussierflächen 26 in einer Ebene mit den Kanälen 18, insbesondere mit den radialen Mittelpunkten der Kanäle.

Im dargestellten Beispiel sind die Fokussiereinrichtungen 24 als hochebene Wafer aus Siliziumeinkristallen ausgestaltet, die jeweils eine reflektierende Fokussierfläche 26 aufweisen. Die Fokussierfläche 26 besteht aus einer dünnen, auf den als Substrat dienenden Wafer gesputterten Schicht aus Chrom mit einer Schichtdicke von 40 nm. Die Rauheit der Fokussierfläche 26 liegt sehr weit unterhalb der optischen Auflösung des zu kalibrierenden Lumineszenzmikroskops. Andere Wafer-Materialien oder reflektierende Metallschichten sind ebenfalls denkbar. Alternativ können die Fokussiereinrichtungen 24 auch hochebene, lumineszierende Fokussierflächen 26 aufweisen. Diese sind etwa als sehr dünne Schichten von fluoreszierenden, aus wenigen hundert Atomen bestehenden Halbleiter-Nanopartikeln, so genannten Quantumdots, ausgestaltet, die wiederum auf einen Si-Wafer oder dergleichen etwa mittels Spin-Ssputtering aufgebracht sind. Bekannte fluoreszierende Materialien für Quantumdots sind beispielsweise Cadmium-Selenide, Cadmium-Telluride, Indium-Phsphor, Blei-Selenide und andere. Gegebenenfalls können die Quantumdots noch mit einer Hülle beschichtet sein. Quantumdots haben gegenüber herkömmlichen fluoreszierenden Materialien den Vorteil sehr stabil zu sein, insbesondere nicht auszubleichen. Die Schichtdicke der fluoreszierenden Fokussierfläche 26 entspricht vorzugsweise einem Monolayer aus Quantumdots und liegt damit beispielsweise in der Größenordnung von 7 bis 10 nm. Bei anderen fluoreszierenden oder reflektierenden Substanzen beträgt sie vorzugsweise maximal nur wenige Atom- bzw. Molekülschichten des betreffenden Materials, besonders bevorzugt ist sie einatomig ausgestaltet.

Die dargestellte Kalibriereinrichtung 10 ist für ein inverses Fluoreszenzmikroskop ausgestaltet, bei dem der Anregungsstrahl von unten, das heißt von der Unterseite 14 der Grundplatte 12 auf das Messvolumen trifft. Selbstverständlich kann die erfindungsgemäße Kalibriereinrichtung aber auch auf Fluoreszenzmikroskope ausgerichtet sein, bei denen der Anregungsstrahl von oben auf das Objekt trifft. In diesem Fall befinden sich die Mikrokanäle 18 auf derselben Seite wie die Fokussiereinrichtungen 24 und die Reservoire 20. Ebenso ist eine andere Anzahl sowie eine andere Anordnung der Kanäle 18 möglich, beispielsweise längs der Grundplatte 12 verlaufend.

Zur Fokussierung des Fluoreszenzmikroskops mittels der erfindungsgemäß vorgesehenen Fokussiereinrichtungen 24 wird folgendermaßen vorgegangen. Zunächst wird die Kalibriereinrichtung 10 auf einen Objekttisch des Fluoreszenzmikroskops positioniert. Dann wird der Messstrahl (Anregungsstrahl) des Geräts mittels des in drei Dimensionen motorisch verstellbaren Objekttisches in x,y-Richtung auf eine der Fokussiereinrichtungen 24 gefahren. (Alternativ kann je nach Ausführung des Mikroskops auch der Anregungsstrahl durch eine verstellbare Optik des Geräts bei festem Objekttisch auf den gewünschten Messort gefahren werden.) Dort erfolgt eine Fokussierung des Strahls in z-Richtung exakt auf die Fokussierfläche 26 der Fokussiereinrichtung 24, indem der Objekttisch motorisch in z-Richtung bewegt wird (beziehungsweise die Optik des Mikroskops entsprechend verstellt wird). Es wird die Position ermittelt, bei der das maximale Reflexionssignal (bzw. Fluoreszenzsignal im Falle einer fluoreszierenden Fokussierfläche 22) detektiert wird. Dieser Vorgang kann vollständig automatisiert erfolgen. Die gefundene Fokuseinstellung wird als z-Koordinate gespeichert, beziehungsweise als Frontabstand zwischen dem Präparat (Fokussierfläche 22) und der Frontlinse der Optik. Sind mehrere Fokussiereinrichtungen 24 vorhanden, wird mit den weiteren Fokussiereinrichtungen 24 ebenso verfahren. Werden für die unterschiedlichen Fokussiereinrichtungen 24 unterschiedliche Fokuseinstellung (z-Koordinaten bzw. Frontabstände) gefunden, bedeutet dies, dass die Grundplatte 12 nicht vollkommen plan ist. In diesem Fall werden die z-Koordinaten für die x,y-Positionen der zwischen den Fokussiereinrichtungen 24 angeordneten Kanäle 18 rechnerisch interpoliert. Anschließend werden die in den Kanälen befindlichen Fluoreszenzstandards vermessen. Hierfür wird der Messstrahl nacheinander auf die Kanäle 18 gefahren und auf die entsprechende gespeicherte beziehungsweise interpolierte z-Koordinate innerhalb des Kanalinneren fokussiert. Die Messungen in den Kanälen müssen nicht exakt auf der Höhe der Fokussierflächen 26 vorgenommen werden, sondern können abweichend hiervon auch in einer beispielsweise um 30 μm von dieser abweichenden Tiefe erfolgen. In diesem Fall wird der Fokus der Optik gegenüber der für den betreffenden Kanal 18 ermittelten Null-Fokuseinstellung um diese Tiefe verstellt. Die Fokusermittlung mittels der Fokussiereinrichtungen 20 dient somit als Referenzwert für die jeweiligen Kanäle 18. In jedem Fall wird durch die integrierten Fokussiereinrichtungen 24 erreicht, dass in jedem Kanal 18 das gleiche Probenvolumen vermessen wird. Insbesondere kann dies auf diese Weise auch über Geräte- und Laborgrenzen hinaus gewährleistet werden, so dass spektrale Einflüsse, die durch unterschiedliche Messtiefen in den Modulen 24 verursacht werden, beispielsweise Wand- und innere Filtereffekte, standardisiert werden und somit vergleichbare und rückführbare Mess- und Kalibrierergebnisse erzielt werden.

Nachfolgend wird die weitere Vorgehensweise zur Kalibrierung des Systems anhand bevorzugter Fluoreszenzstandards 22 erläutert, die - zusammen mit der Kalibriereinrichtung 10 und ihren korrigierten Fluoreszenzspektren in digitaler Form -Bestandteil eines erfindungsgemäßen Kits sind.

Zur Kalibrierung des Emissionskanals eines Fluoreszenzmikroskops wird gemäß dem vorliegenden Beispiel ein Set von fünf Fluoreszenzstandards 22 (Emissionsstandards) A, B, C, D und E eingesetzt, wobei A ein Biphenyl-, B ein Naphthalin-, C und D jeweils ein Coumarin- und E ein Oxazinderivat ist. Im konkreten Beispiel handelt es sich um folgende Farbstoffe:

A: 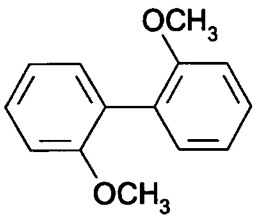 , B: 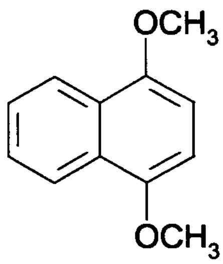 , C: 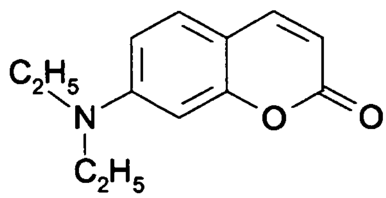

D: 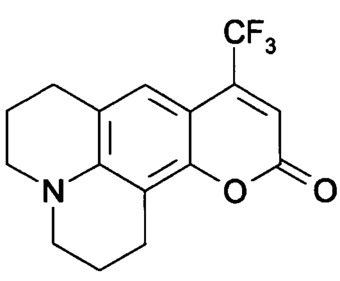 , E: 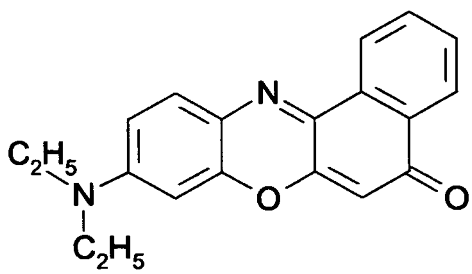 .

Alle Farbstoffe weisen eine Reinheit von über 99 % auf, sind insbesondere als Feststoff bei Lagerung im Dunklen bei 4 °C in Gegenwart von Luftsauerstoff langzeitstabil. Die luftgesättigten Lösungen sind bei Lagerung im

Dunklen bei 4 °C ausreichend langzeitstabil und bilden unter den für Photolumineszenzmessungen typischen Mess- und Anregungsbedingungen keine Photoprodukte, die in dem für die Kalibrierung eingesetzten Spektralbereich absorbieren oder emittieren. Figur 2 zeigt im unteren Teil die spektral korrigierten und normierten Emissionsspektren der Emissionsstandards A bis E $I_A(\lambda)$ bis $I_B(\lambda)$ (durchgezogene Linien). Es ist erkennbar, dass sämtliche Standardspektren einen breiten und unstrukturierten Bandenverlauf mit nur jeweils einem Maximum und keinen Schultern oder Unstetigkeiten in dem, für die Kalibrierung verwendeten Spektralbereich aufweisen. Ferner wurde bei der Auswahl der Fluoreszenzfarbstoffe Wert auf möglichst große Wellenlängenabstände zwischen den Maxima der Emissionsspektren und denen der dazugehörigen nicht gezeigten Absorptionsspektren gelegt (Stokes-Shift), um die nochmalige Absorption einmal emittierter Photonen aufgrund von Em-Abs-Banden-Überlappung zu vermeiden. Insbesondere beträgt dieser Abstand für die Farbstoffe A, B, C, D und E etwa 5400, 4900, 4300, 4900 bzw. 2400 $cm^{-1}$. Die Farbstoffe weisen zudem eine geringe Anisotropie mit $r \leq 0{,}05$ (UV/vis-Spektralbereich mit $\lambda \leq 700$ nm) sowie eine hinreichend geringe Temperaturabhängigkeit der Form der Fluoreszenzbanden im Temperaturbereich zwischen 20 °C und 30 °C auf. Besonders hervorzuheben ist ferner, dass die Intensität aller Spektren $I_i(\lambda)$ an ihrem jeweiligen Überschneidungspunkt $\lambda_{i/i+1}$ größer als 20 % der jeweiligen maximalen (normierten) Intensität ist. Im vorliegenden Beispiel der Verbindungen A bis E wird für sämtliche Überschneidungspunkte sogar eine Intensität von mindestens 40 % der Maximalintensitäten eingehalten. Ferner ist die Halbwertsbreite erfindungsgemäß für sämtliche Farbstoffe zumindest im UV/vis-Bereich größer als 1400 $cm^{-1}$. Vorliegend betragen die Halbwertsbreiten der Emissionsspektren der Verbindungen A bis E etwa 4250, 4400, 2850, 2890 bzw. 1630 $cm^{-1}$

Der Spektralbereich der vorgestellten Standardkombinationen kann durch die Integration weiterer Farbstoffe wie z.B. der genannten Merocyanin- und Styrylverbindungen gemäß den oben beschriebenen allgemeinen Strukturen 6, 7 und 8 in den NIR-Spektralbereich ausgedehnt werden. Hier gelten analoge Auswahl- und Anforderungskriterien, wobei im Bereich bei $\lambda > 700$ nm lediglich eine Mindestintensität an den Überlappungspunkten von insbesondere mindestens 12 % der Maximalintensität, eine Halbwertsbreite von insbesondere mindestens 1200 cm-1 sowie eine Anisotropie von insbesondere $r \leq 0{,}07$ gefordert wird.

Zur spektralen Kalibrierung des Fluoreszenzmikroskops erfolgt zunächst die Aufnahme der Rohemissionsspektren der fünf (oder mehr) oben genannten, im Kit enthaltenen Fluoreszenzstandards A bis E mit dem zu kalibrierenden Fluoreszenzmikroskop, wobei die Fokussierung wie vorstehend beschrieben unter Verwendung der Fokussiereinrichtung(en) 24 durchgeführt wird. Die Messbedingungen am Photolumineszenzmessgerät - wie Spaltbreiten, Detektorspannungen, Scanmodus und -geschwindigkeit, Filter, Polarisatoren und Polarisatorwinkel etc. - werden auf die Parameter eingestellt, unter denen gewöhnlich Fluoreszenzspektren aufgenommen werden bzw. für die spektral korrigierte Lumineszenzspektren benötigt werden. Unter den Bedingungen jeder Farbstoffmessung wird auch jeweils ein Blindwertspektrum des verwendeten Lösungsmittels gemessen. Dann erfolgt eine Blindwertkorrektur, indem die Lösungsmittelspektren von den jeweiligen gemessenen Spektren subtrahiert werden, wobei die blindwertkorrigierten, gemessenen Spektren $J_i(\lambda)$ erhalten werden, die ebenfalls im unteren Teil der Figur 2 als unterbrochene Linien dargestellt sind ($J_A(\lambda)$ bis $J_E(\lambda)$).

Anschließend erfolgt eine Verrechnung der gemessenen Spektren $J_i(\lambda)$ mit den mitgelieferten korrigierten Spektren $I_i(\lambda)$, die mit einem rückführbar kalibrierten Fluoreszenzspektrometer mit bekannter Messunsicherheit gemessen, blindwert- und spektral korrigiert wurden und damit geräteunabhängig und rückführbar auf die radiometrischen Primärnormale "Schwarzer Strahler" oder "Kryoradiometer" sind. Dafür werden zunächst die Überschneidungspunkte (genauer Überschneidungswellenlängen) $\lambda_{i/i+1}$ von jeweils zwei spektral aufeinander folgenden Emissionsspektren ermittelt. Dann werden Verknüpfungsfaktoren $\alpha_i$ für jeden Farbstoff i durch statistische Mittelung einander überlappender Spektralbereiche im Bereich $\pm\Delta\lambda$ um die jeweilige Überschneidungswellenlänge $\lambda_{i/i+1}$ aller vier benachbarten Spektren $I_i(\lambda)$, $I_{i+1}(\lambda)$, $J_i(\lambda)$ und $J_{i+1}(\lambda)$ gemäß den Gleichungen 1 bis 3 ermittelt. In diesem Schritt erfolgt implizit die Berechnung der Teilkorrekturfunktionen $F_i(\lambda)$ gemäß Gleichung 2 durch Quotientenbildung der korrigierten Spektren $I_i(\lambda)$ und der korrespondierenden gemessenen Spektren $J_i(\lambda)$ für die einzelnen Fluoreszenzstandards i. Die Verläufe der (ungewichteten) Teilkorrekturspektren $F_A(\lambda)$ bis $F_E(\lambda)$ für die Standards A bis E sind im oberen Teil der Figur 2 dargestellt.

$$\alpha_{i+1} = \frac{\sum_{\lambda}\left[\frac{F_i(\lambda)}{F_{i+1}(\lambda)} \Big/ \sigma^2_{i/i+1}(\lambda)\right]}{\sum_{\lambda} 1/\sigma^2_{i/i+1}(\lambda)} \qquad (1)$$

$$F_i(\lambda) = \frac{I_i(\lambda)}{J_i(\lambda)} \quad (2)$$

$$\sigma^2_{i/i+1}(\lambda) = \left[\frac{1}{J_i(\lambda)} + \frac{1}{J_{i+1}(\lambda)}\right] \cdot \left[\frac{F_i(\lambda)}{F_{i+1}(\lambda)}\right]^2 \quad (3)$$

Für den ersten Verknüpfungsfaktor gilt $\alpha_1 \equiv 1$. Dabei wird der Summand in Gleichung 1 für den Verknüpfungsfaktor $\alpha_{i+1}$ bevorzugt nur jeweils über einen vorgegebenen optimierten spektralen Überlappungsbereich $\pm\Delta\lambda_{OL}$ um die jeweilige Überschneidungswellenlänge $\lambda_{i/i+1}$ ermittelt. Im vorliegenden Beispiel erfolgt die statistische Mittelung zur Berechnung von $\alpha_{i+1}$ gemäß Gleichung 1 über einen beidseitig an die jeweiligen Überschneidungswellenlängen $\lambda_{i/i+1}$ anschließenden Bereich von $\pm 8$ nm.

Nachfolgend werden Anschlussfaktoren $\beta_i$ für jeden Fluoreszenzstandard i gemäß Gleichung 4 durch Multiplikation aller spektral vorhergehender Verknüpfungsfaktoren $\alpha_i$ ermittelt. Aus $\alpha_1 \equiv 1$ folgt $\beta_1 = 1$.

$$\beta_i = \prod_{k=1}^{i} \alpha_k \quad (4)$$

Schließlich erfolgt die Berechnung der Gesamtkorrekturfunktion F(λ). Demnach werden zunächst die Werte der Funktion F(λ) in einem vorgebbaren Verknüpfungsbereich $\lambda_{i/i+1} \pm\Delta\lambda_{LK}$ um die jeweiligen Überschneidungspunkte $\lambda_{i/i+1}$ gemäß den Gleichungen 5 und 6 ermittelt. In dem Verknüpfungsbereich $\lambda_{i/i+1} \pm\Delta\lambda_{LK}$ erfolgt somit eine statistische Mittelung der einander jeweils überlappenden, durch $\beta_i$ gewichteten Teilkorrekturfunktionen $F_i(\lambda)$. Im vorliegenden Beispiel wird gemäß einem voreingestellten Ausführungsmodus des Programms Gleichung 5 jeweils nur genau für die ermittelten Überschneidungswellenlängen $\lambda_{i/i+1}$ angewendet, das heißt $\Delta\lambda_{LK} = 0$.

$$F(\lambda) = \frac{\sum_{i=1}^{N} \beta_i \cdot F_i(\lambda)/\sigma^2(\lambda)}{\sum_{i=1}^{N} 1/\sigma^2(\lambda)} \quad (5)$$

mit

$$\sigma^2(\lambda) = \frac{[\beta_i F_i(\lambda)]^2}{J_i(\lambda)} \quad (6)$$

Alle anderen Punkte der Korrekturfunktion F(λ), das heißt in den Bereichen $\lambda \neq \lambda_{i/i+1} \pm\Delta\lambda_{LK}$, werden vorzugsweise nicht gemittelt, sondern einfach nach Gleichung 7 berechnet. (Dies ist gleichbedeutend mit einer Summierung nach Gleichung 5 über nur ein i.) Mit anderen Worten entspricht die Gesamtkorrekturfunktion F(λ) außerhalb der Verknüpfungsbereiche $\lambda_{i/i+1} \pm\Delta\lambda_{LK}$, insbesondere für alle Wellenlängen außerhalb der Überschneidungspunkte $\lambda_{i/i+1}$, den Teilkorrekturfunktionen $F_i(\lambda)$, gewichtet mit den für diese ermittelten Faktoren $\beta_i$. Die so erhaltene Emissionskorrekturfunktion F(λ) ist in Figur 4 oben ebenfalls dargestellt.

$$F(\lambda) = \beta_i \cdot F_i(\lambda) \quad (7)$$

Alle vorstehenden Schritte werden durch einen benutzerfreundlichen Computerprogrammalgorithmus, der vorzugsweise im Kit zusammen mit der Kalibriereinrichtung 10, den Farbstoffstandards 22 und den korrigierten und zertifizierten Fluoreszenzspektren $I_i(\lambda)$ enthalten ist, automatisch durchgeführt.

Spektren, die auf einem in dieser Weise kalibrierten Messsystem unter den gleichen Kalibriereinstellungen gemessenen werden, werden - nach Subtraktion entsprechender Blindwertspektren - durch einfache Multiplikation mit der Korrekturfunktion $F(\lambda)$ spektral korrigiert. Man erhält auf diese Weise rückführbare, spektral korrigierte Lumineszenzspektren in relativen Intensitätseinheiten.

Das vorbeschriebene Beispiel bezieht sich auf die Erstellung einer Gesamtkorrekturfunktion für die Emission unter Verwendung von Emissionsstandards. Wird ein Satz von Anregungsstandards auf einem Lumineszenzmesssystem auf gleiche Weise gemessen und die erhaltenen Anregungsspektren mit einem Datensatz für die spektral korrigierten (zertifizierten) Anregungsspektren der Fluoreszenzstandards entsprechend verrechnet, so wird eine spektrale Anregungskorrekturfunktion erhalten.

In abweichender Ausgestaltung der Erfindung sind die Kanäle 18 und die Reservoire 20 der Kalibriereinrichtung 10 gemäß Figur 1A bis 1D mit Lösungen ein und desselben Fluoreszenzstandards in unterschiedlichen Konzentrationen gefüllt. Auch hierzu können etwa die vorgenannten Fluoreszenzstandards Verwendung finden. Eine solche Einrichtung eignet sich zur Bestimmung des Linearitätsbereichs des verwendeten Detektorsystems des Anregungs- und/oder Emissionskanals des Messsystems.

BEZUGSZEICHENLISTE

| | |
|---|---|
| 10 | Kalibriereinrichtung |
| 12 | Grundplatte |
| 14 | Unterseite |
| 16 | Oberseite |
| 18 | Kanal |
| 20 | Reservoir |
| 22 | Fluoreszenzstandard |
| 24 | Fokussiereinrichtung |
| 26 | Fokussierfläche |

| | |
|---|---|
| $i$ | fortlaufende Nr. eines Fluoreszenzstandards im Kit mit $1 \leq i \leq N$ |
| $I_i(\lambda)$ | spektral korrigiertes (zertifiziertes) Fluoreszenzspektrum des Fluoreszenzstandards i |
| $J_i(\lambda)$ | gemessenes, blindwertkorrigiertes Fluoreszenzspektrum |
| $F_i(\lambda)$ | Teilkorrekturfunktion des Fluoreszenzstandards i |
| $F(\lambda)$ | Gesamtkorrekturfunktion |
| $\lambda_{i/i+1}$ | Überschneidungswellenlängen aufeinander folgender Spektren des i-ten und (i+1)-ten Standards |
| $\alpha_i$ | Verknüpfungsfaktor benachbarter Teilkorrekturfunktionen |
| $\beta_i$ | Anschlussfaktor |

**Patentansprüche**

1. Kalibriereinrichtung (10) zur Charakterisierung von Lumineszenzmesssystemen, insbesondere von spektral auflösenden, Weitfeld- und/oder konfokalen Imagingsystemen, umfassend

    (a) eine Grundplatte (12), die zumindest einen durchströmbaren Kanal (18) aufweist, wobei der zumindest eine Kanal (18) als Probenkammer für das Lumineszenzmesssystem ausgebildet ist,
    (b) jeweils mindestens ein, mit dem zumindest einen Kanal (18) kommunizierendes Reservoir (20) zur Aufnahme einer Flüssigkeit sowie
    (c) zumindest eine in die Grundplatte (12) integrierte Fokussiereinrichtung (24) zur Einstellung eines definierten Messstrahlfokus des zu kalibrierenden Lumineszenzmesssystems mit einer hochebenen Fokussierfläche (26), die mit einem Innenraum des zumindest einen Kanals (18) fluchtet, das heißt in einer Ebene liegt.

2. Kalibriereinrichtung (10) nach Anspruch 1,
**dadurch gekennzeichnet, dass**
zumindest zwei in die Grundplatte (12) integrierte Fokussiereinrichtungen (18) vorgesehen sind, die insbesondere an einander gegenüberliegenden Randbereichen der Grundplatte (12) angeordnet sind.

3. Kalibriereinrichtung (10) nach einem der vorhergehenden Ansprüche,
**dadurch gekennzeichnet, dass**
die zumindest eine Fokussiereinrichtung (24) eine reflektierende und/oder fluoreszierende Fokussierfläche (26) aufweist, die insbesondere eine Rauheit unterhalb der optischen Auflösung des zu kalibrierenden Lumineszenzmesssystems aufweist.

4. Kalibriereinrichtung (10) nach Anspruch 3,
**dadurch gekennzeichnet, dass**
die zumindest eine Fokussiereinrichtung (18) ein mit einer reflektierenden Metallschicht beschichtetes Substrat, insbesondere ein Chrom-besputterter Silizium-Wafer ist.

5. Kalibriereinrichtung (10) nach Anspruch 3,
**dadurch gekennzeichnet, dass**
die zumindest eine Fokussiereinrichtung (18) ein mit einem lumineszierenden Material beschichtetes Substrat, insbesondere ein mit einem fluoreszierenden Material, bevorzugt mit Quantumdots besputterter Wafer ist.

6. Kalibriereinrichtung (10) nach einem der vorhergehenden Ansprüche,
**dadurch gekennzeichnet, dass**
die Grundplatte (12) eine Mehrzahl von Kanälen (18) mit jeweils zumindest einem kommunizierenden Reservoir (20) aufweist.

7. Kalibriereinrichtung (10) nach einem der vorhergehenden Ansprüche,
**dadurch gekennzeichnet, dass**
der zumindest eine Kanal (18) und/oder das mindestens eine diesem Kanal (18) zugeordnete Reservoir (20) mit zumindest einem Fluoreszenzstandard (22) zumindest teilweise befüllt ist.

8. Kalibriereinrichtung (10) nach einem der Ansprüche 1 bis 7,
**dadurch gekennzeichnet, dass**
die Grundplatte (12) eine Mehrzahl von Kanälen (18) und diesen zugeordneten Reservoiren (20) aufweist, wobei die Kanäle (18) und/oder die zugeordneten Reservoire (20) mit unterschiedlichen Fluoreszenzstandards (22) zumindest teilweise befüllt sind, die derart gewählt sind, dass ihre spektral korrigierten Fluoreszenzspektren zusammen einen vorgegebenen Spektralbereich mit einer vorgegebenen Mindestintensität abdecken.

9. Kalibriereinrichtung (10) nach Anspruch 8,
**dadurch gekennzeichnet, dass**
die vorgegebene Mindestintensität der Fluoreszenzbanden jeweils spektral aufeinander folgender, korrigierter Fluoreszenzspektren an ihren Überschneidungswellenlängen im UV/vis-Spektralbereich mit $\lambda \leq 700$ nm mindestens 20 %, insbesondere mindestens 25 %, bevorzugt mindestens 30 %, der maximalen Intensität der flankierenden Banden beträgt.

10. Kalibriereinrichtung (10) nach einem der Ansprüche 8 oder 9,
**dadurch gekennzeichnet, dass**
die vorgegebene Mindestintensität der Fluoreszenzbanden jeweils spektral aufeinander folgender, korrigierter Fluoreszenzspektren an ihren Überschneidungswellenlängen im NIR-Spektralbereich mit $\lambda > 700$ nm mindestens 10 %, insbesondere etwa 15 % der maximalen Bandenintensität beträgt.

11. Kalibriereinrichtung (10) nach einem der Ansprüche 8 bis 10,
**dadurch gekennzeichnet, dass**
der vorgegebene Spektralbereich den UV/vis/NIR-Bereich zumindest teilweise abdeckt, insbesondere für eine Emissionskorrektur von 310 bis 730 nm reicht, bevorzugt von 300 bis 950 nm, oder für eine Anregungskorrektur von 280 bis 600 nm, bevorzugt von 240 bis 900 nm.

12. Kalibriereinrichtung (10) nach einem der Ansprüche 8 bis 11,

**dadurch gekennzeichnet, dass**
die Fluoreszenzstandards (22) Fluoreszenzbanden im UV/vis-Spektralbereich mit $\lambda \leq 700$ nm mit einer Halbwertsbreite ($FWHM_i$) zumindest von 1600 $cm^{-1}$, insbesondere von zumindest 2000 $cm^{-1}$, vorzugsweise von mindestens 2400 $cm^{-1}$ aufweisen und im NIR-Bereich mit $\lambda > 700$ nm von mindestens 1200 $cm^{-1}$, insbesondere mindestens 1400 $cm^{-1}$.

**13.** Kalibriereinrichtung (10) nach einem der Ansprüche 1 bis 7,
**dadurch gekennzeichnet, dass**
die Grundplatte (12) eine Mehrzahl von Kanälen (18) und diesen zugeordneten Reservoiren (20) aufweist, wobei die Kanäle (18) und/oder die zugeordneten Reservoire (20) mit Lösungen zumindest eines Fluoreszenzstandards (22) in unterschiedlichen Konzentrationen zumindest teilweise befüllt sind.

**14.** Kalibriereinrichtung (10) nach einem der Ansprüche 8 bis 13,
**dadurch gekennzeichnet, dass**
der zumindest eine Fluoreszenzstandard (22) unstrukturierte Fluoreszenzbanden mit nur einem Maximum und einem stetigen Bandenverlauf aufweist.

**15.** Kalibriereinrichtung (10) nach einem der Ansprüche 8 bis 14,
**dadurch gekennzeichnet, dass**
der zumindest eine Fluoreszenzstandard (22) einen spektralen Abstand zwischen seinem Absorptions- und Emissionsmaximum von mindestens 2000 $cm^{-1}$, insbesondere von mindestens 2400 $cm^{-1}$, vorzugsweise von mindestens 2800 $cm^{-1}$, aufweist.

**16.** Kalibriereinrichtung (10) nach einem der Ansprüche 8 bis 15,
**dadurch gekennzeichnet, dass**
der zumindest eine Fluoreszenzstandard (22) ein Emissionsstandard ist, ausgewählt aus der Gruppe enthaltend Biphenyl-, Naphthalin-, Cumarin-, Oxazin-, Merocyanin-, Hemicyanin- und Styryl-Derivate, insbesondere eine Kombination von diesen.

**17.** Kalibriereinrichtung (10) nach einem der Ansprüche 8 bis 15,
**dadurch gekennzeichnet, dass**
der zumindest eine Fluoreszenzstandard (22) ein Anregungsstandard ist, ausgewählt aus der Gruppe enthaltend Biphenyl-, Terphenyl-, Oxadiazol-, Cumarin-, Oxazin-, Merocyanin-, Hemicyanin- und Styryl-Derivate, insbesondere eine Kombination von diesen.

**18.** Kit umfassend eine Kalibriereinrichtung (10) nach einem der Ansprüche 1 bis 17 sowie ein Set unterschiedlicher Fluoreszenzstandards (22).

**19.** Kit nach Anspruch 18, ferner umfassend korrigierte Fluoreszenzspektren der Fluoreszenzstandards (22) in computerlesbarer Form und/oder eine Angabe einer Internetseite, auf welcher die korrigierten Fluoreszenzspektren abrufbar sind.

**20.** Kit nach Anspruch 18 oder 19, ferner umfassend ein Programmalgorithmus zur Berechnung einer Gesamtkorrekturfunktion für einen vorgegebenen Spektralbereich und/oder eine Angabe einer Internetseite, auf welcher das Programm abrufbar ist.

**21.** Verwendung einer Kalibriereinrichtung (10) nach einem der Ansprüche 1 bis 17 oder eines Kits nach einem der Ansprüche 18 bis 20 zur Ermittlung der spektralen Empfindlichkeit eines Photolumineszenzmesssystems.

**22.** Verwendung einer Kalibriereinrichtung (10) nach einem der Ansprüche 1 bis 17 oder eines Kits nach einem der Ansprüche 18 bis 20 zur Bestimmung von relativen Fluoreszenzquantenausbeuten im UV/vis/NIR-Spektralbereich.

**23.** Verwendung einer Kalibriereinrichtung (10) nach einem der Ansprüche 1 bis 17 oder eines Kits nach einem der Ansprüche 18 bis 20 zur Bestimmung des Linearitätsbereichs eines Detektionssystems eines Photolumineszenzmesssystems.

## Claims

1. Calibration device (10) for the characterization of luminescence measurement systems, in particular of spectrally resolving far field and/or confocal imaging systems, comprising

   (a) a base plate (12) which has at least one channel (18) that can be flowed through, the at least one channel (18) being configured as a sample chamber for the luminescence measurement system,
   (b) respectively at least one reservoir (20), communicating with the at least one channel (18), for holding a liquid and
   (c) at least one focusing device (24), integrated into the base plate (12), for adjusting a defined measurement beam focus of the luminescence measurement system to be calibrated, having a highly planar focusing surface (26) which is flush, i.e. lies in one plane with an internal space of the at least one channel (18).

2. Calibrating device (10) according to Claim 1,
   **characterized in that**
   at least two focusing devices (18) integrated into the base plate (12) are provided, which in particular are arranged in opposite edge regions of the base plate (12).

3. Calibrating device (10) according to one of the preceding claims,
   **characterized in that**
   the at least one focusing device (24) has a reflective and/or fluorescent focusing surface (26), which in particular has a roughness below the optical resolution of the luminescence measurement system to be calibrated.

4. Calibrating device (10) according to Claim 3,
   **characterized in that**
   the at least one focusing device (18) is a substrate coated with a reflective metal layer, in particular a chromium-sputtered silicon wafer.

5. Calibrating device (10) according to Claim 3,
   **characterized in that**
   the at least one focusing device (18) is a substrate coated with a luminescent material, in particular a wafer sputtered with a fluorescent material, preferably with quantum dots.

6. Calibrating device (10) according to one of the preceding claims,
   **characterized in that**
   the base plate (12) has a multiplicity of channels (18), respectively with at least one communicating reservoir (20).

7. Calibrating device (10) according to one of the preceding claims,
   **characterized in that**
   the at least one channel (18), and/or the at least one reservoir (20) assigned to this channel (18), is at least partially filled with at least one fluorescence standard (22).

8. Calibrating device (10) according to one of Claims 1 to 7,
   **characterized in that**
   the base plate (12) has a multiplicity of channels (18) and reservoirs (20) assigned to them, the channels (18) and/or the associated reservoirs (20) being at least partially filled with different fluorescence standards (22) which are selected so that their spectrally corrected fluorescence spectra together cover a predetermined spectral range with a predetermined minimum intensity.

9. Calibrating device (10) according to Claim 8,
   **characterized in that**
   the predetermined minimum intensity of the fluorescence bands of corrected fluorescence spectra, respectively following one another spectrally, at their overlap wavelengths in the UV/vis spectral range with $\lambda \leq 700$ nm is at least 20%, in particular at least 25%, preferably at least 30% of the maximum intensity of the flanking bands.

10. Calibrating device (10) according to Claim 8 or 9,
    **characterized in that**
    the predetermined minimum intensity of the fluorescence bands of corrected fluorescence spectra, respectively

following one another spectrally, at their overlap wavelengths in the NIR spectral range with $\lambda > 700$ nm is at least 10%, in particular about 15% of the maximum band intensity.

**11.** Calibrating device (10) according to one of Claims 8 to 10,
**characterized in that**
the predetermined spectral range at least partially covers the UV/vis/NIR range, and in particular for emission correction extends from 310 to 730 nm, preferably from 300 to 950 nm, or for excitation correction extends from 280 to 600 nm, preferably from 240 to 900 nm.

**12.** Calibrating device (10) according to one of Claims 8 to 11,
**characterized in that**
the fluorescence standards (22) have fluorescent bands in the UV/vis spectral range with $\lambda \leq 700$ nm having a full width at half maximum ($FWHM_i$) of at least 1600 $cm^{-1}$, in particular at least 2000 $cm^{-1}$, preferably at least 2400 $cm^{-1}$, and in the NIR range with $\lambda > 700$ nm at least 1200 $cm^{-1}$, in particular at least 1400 $cm^{-1}$.

**13.** Calibrating device (10) according to one of Claims 1 to 7,
**characterized in that**
the base plate (12) has a multiplicity of channels (18) and reservoirs (20) assigned to them, the channels (18) and/or the associated reservoirs (20) being at least partially filled with solutions of at least one fluorescence standard (22) in different concentrations.

**14.** Calibrating device (10) according to one of Claims 8 to 13,
**characterized in that**
the at least one fluorescence standard (22) has unstructured fluorescence bands with only one maximum and a continuous band profile.

**15.** Calibrating device (10) according to one of Claims 8 to 14,
**characterized in that**
the at least one fluorescence standard (22) has a spectral spacing between its absorption and emission maximum of at least 2000 $cm^{-1}$, in particular at least 2400 $cm^{-1}$, preferably at least 2800 $cm^{-1}$.

**16.** Calibrating device (10) according to one of Claims 8 to 15,
**characterized in that**
the at least one fluorescence standard (22) is an emission standard selected from the group containing biphenyl, naphthalene, coumarin, oxazine, merocyanine, hemicyanine and styryl derivatives, in particular a combination of these.

**17.** Calibrating device (10) according to one of Claims 8 to 15,
**characterized in that**
the at least one fluorescence standard (22) is an excitation standard selected from the group containing biphenyl, terphenyl, oxadiazole, coumarin, oxazine, merocyanine, hemicyanine and styryl derivatives, in particular a combination of these.

**18.** Kit comprising a calibrating device (10) according to one of Claims 1 to 17 and a set of different fluorescence standards (22).

**19.** Kit according to Claim 18, furthermore comprising corrected fluorescence spectra of the fluorescence standard (22) in computer-readable form and/or a specification of an Internet site on which the corrected fluorescence spectra can be called up.

**20.** Kit according to Claim 18 or 19, furthermore comprising a program algorithm for calculating an overall correction function for a predetermined spectral range and/or a specification of an Internet site on which the program can be called up.

**21.** Use of a calibrating device (10) according to one of Claims 1 to 17 or a kit according to one of Claims 18 to 20 for determining the spectral sensitivity of a photoluminescence measurement system.

**22.** Use of a calibrating device (10) according to one of Claims 1 to 17 or a kit according to one of Claims 18 to 20 for

determining relative fluorescence quantum efficiencies in the UV/vis/NIR spectral range.

23. Use of a calibrating device (10) according to one of Claims 1 to 17 or a kit according to one of Claims 18 to 20 for determining the linearity range of a detection system of a photoluminescence measurement system.

**Revendications**

1. Dispositif d'étalonnage (10) destiné à caractériser des systèmes de mesure de luminosité, en particulier de systèmes d'imagerie à résolution spectrale, à large champ et/ou confocale, comprenant :

   (a) une plaque de base (12) dotée d'au moins un canal (18) qui peut être traversé, le ou les canaux (18) étant configurés comme chambres à échantillons du système de mesure de luminosité,
   (b) au moins un réservoir (20) qui communique avec au moins un du ou des canaux (18) pour reprendre un liquide et
   (c) au moins un dispositif (24) de focalisation intégré à la plaque de base (12) et qui établit un foyer défini du faisceau de mesure du système de mesure de luminosité à étalonner, avec une surface de focalisation (26) à haute planéité, alignée avec l'espace intérieur du ou des canaux (18), c'est-à-dire située dans le même plan que ces derniers.

2. Dispositif d'étalonnage (10) selon la revendication 1, **caractérisé en ce qu'**il présente au moins deux dispositifs de focalisation (18) intégrés dans la plaque de base (12) et disposés en particulier sur des bordures mutuellement opposées de la plaque de base (12).

3. Dispositif d'étalonnage (10) selon l'une des revendications précédentes, **caractérisé en ce que** le ou les dispositifs de focalisation (24) présentent une surface de focalisation (26) réfléchissante et/ou fluorescente dont la rugosité est en particulier inférieure à la résolution optique du système de mesure de luminosité à étalonner.

4. Dispositif d'étalonnage (10) selon la revendication 3, **caractérisé en ce que** le ou les dispositifs de focalisation (18) sont un substrat revêtu d'une couche métallique réfléchissante, et en particulier une galette de silicium sur laquelle a été pulvérisé du chrome.

5. Dispositif d'étalonnage (10) selon la revendication 3, **caractérisé en ce que** le ou les dispositifs de focalisation (18) sont un substrat revêtu d'un matériau luminescent, en particulier un matériau fluorescent et de préférence une galette sur laquelle des points quantiques ont été pulvérisés.

6. Dispositif d'étalonnage (10) selon l'une des revendications précédentes, **caractérisé en ce que** la plaque de base (12) présente plusieurs canaux (18) avec chacun desquels au moins un réservoir (20) communique.

7. Dispositif d'étalonnage (10) selon l'une des revendications précédentes, **caractérisé en ce que** le ou les canaux (18) et/ou le ou les réservoirs (20) respectivement associés à ces canaux (18) sont remplis au moins en partie d'un ou plusieurs étalons fluorescents (22).

8. Dispositif d'étalonnage (10) selon l'une des revendications 1 à 7, **caractérisé en ce que** la plaque de base (12) présente plusieurs canaux (18) auxquels sont associés des réservoirs (20) respectifs, les canaux (18) et/ou les réservoirs (20) associés étant remplis au moins en partie de différents étalons de fluorescence (22) sélectionnés de telle sorte que leurs spectres de fluorescence corrigés spectralement couvrent ensemble une plage spectrale prédéterminée à une intensité minimale prédéterminée.

9. Dispositif d'étalonnage (10) selon la revendication 8, **caractérisé en ce que** l'intensité minimale prédéterminée des bandes de fluorescence des spectres de fluorescence corrigés spectralement et successifs vaut sur leur longueur d'onde de croisement dans la plage spectrale allant de l'UV au visible, pour $\lambda \leq 700$ nm, au moins 20 %, en particulier au moins 25 %, de préférence au moins 30 %, de l'intensité maximale des bandes qui les flanquent.

10. Dispositif d'étalonnage (10) selon l'une des revendications 8 ou 9, **caractérisé en ce que** l'intensité minimale prédéterminée des bandes de fluorescence des spectres de fluorescence corrigés spectralement et successifs vaut sur leur longueur d'onde de croisement dans la plage spectrale de l'IR proche, pour $\lambda > 700$ nm, est d'au moins 10 % et en particulier d'environ 15 % de l'intensité maximale de la bande.

**11.** Dispositif d'étalonnage (10) selon l'une des revendications 8 à 10, **caractérisé en ce que** la plage spectrale prédéterminée recouvre au moins en partie la plage UV, visible, infrarouge proche et atteint en particulier de 310 à 730 nm et de préférence de 300 à 950 nm pour une correction d'émission ou de 280 à 600 nm et de préférence de 240 à 900 nm pour une correction d'excitation.

**12.** Dispositif d'étalonnage (10) selon l'une des revendications 8 à 11, **caractérisé en ce que** les étalons de fluorescence (22) présentent des bandes de fluorescence dans la plage spectrale UV-visible, pour $\lambda \leq 700$ nm, une largeur à mi-hauteur ($FWHM_i$) d'au moins 1600 $cm^{-1}$, en particulier d'au moins 2000 $cm^{-1}$ et de préférence d'au moins 2400 $cm^{-1}$ et dans la plage de l'IR proche, pour $\lambda > 700$ nm, d'au moins 1200 $cm^{-1}$ et en particulier d'au moins 1400 $cm^{-1}$.

**13.** Dispositif d'étalonnage (10) selon l'une des revendications 1 à 7, **caractérisé en ce que** la plaque de base (12) présente plusieurs canaux (18) et les réservoirs (20) qui leurs sont associés, les canaux (18) et/ou les réservoirs (20) associés étant remplis au moins en partie de solutions d'au moins un étalon de fluorescence (22) à différentes concentrations.

**14.** Dispositif d'étalonnage (10) selon l'une des revendications 8 à 13, **caractérisé en ce que** le ou les étalons de fluorescence (22) présentent des bandes de fluorescence non structurées qui présentent un seul maximum et une évolution constante dans la bande.

**15.** Dispositif d'étalonnage (10) selon l'une des revendications 8 à 14, **caractérisé en ce que** le ou les étalons de fluorescence (22) présentent une distance spectrale entre le maximum d'absorption et le maximum d'émission d'au moins 2000 $cm^{-1}$, en particulier d'au moins 2400 $cm^{-1}$ et de préférence d'au moins 2800 $cm^{-1}$.

**16.** Dispositif d'étalonnage (10) selon l'une des revendications 8 à 15, **caractérisé en ce que** le ou les étalons de fluorescence (22) sont des étalons d'émission sélectionnés dans l'ensemble qui contient des dérivés de biphényle, de naphtaline, de coumarine, d'oxazine, de mérocyanine, d'hémicyanine et de styryle et en particulier une combinaison de ceux-ci.

**17.** Dispositif d'étalonnage (10) selon l'une des revendications 8 à 15, **caractérisé en ce que** le ou les étalons de fluorescence (22) sont des étalons d'excitation sélectionnés dans l'ensemble qui comprend les dérivés de biphényle, de terphényle, d'oxadiazole, de coumarine, d'oxazine, de mérocyanine, d'hémicyanine et de styryle et en particulier une combinaison de ceux-ci.

**18.** Trousse contenant un dispositif d'étalonnage (10) selon l'une des revendications 1 à 17 ainsi qu'un jeu de différents étalons de fluorescence (22).

**19.** Trousse selon la revendication 18, comprenant en outre des spectres corrigés de fluorescence de l'étalon de fluorescence (22), sous forme lisible par ordinateur, et/ou l'indication d'une page internet sur laquelle les spectres de fluorescence corrigés peuvent être repris.

**20.** Trousse selon les revendications 18 ou 19, comprenant en outre un algorithme de programme destiné à calculer une fonction de correction globale d'une plage spectrale prédéterminée et/ou l'indication d'une page internet sur laquelle le programme peut être repris.

**21.** Utilisation d'un dispositif d'étalonnage (10) selon l'une des revendications 1 à 17 ou d'une trousse selon l'une des revendications 18 à 20 pour la détermination de la sensibilité spectrale d'un système de mesure de photoluminescence.

**22.** Utilisation d'un dispositif d'étalonnage (10) selon l'une des revendications 1 à 17 ou d'une trousse selon l'une des revendications 18 à 20 pour déterminer les rendements quantiques relatifs de fluorescence dans la plage spectrale de l'UV, du visible et de l'infrarouge proche.

**23.** Utilisation d'un dispositif d'étalonnage (10) selon l'une des revendications 1 à 17 ou d'une trousse selon l'une des revendications 18 à 20 pour déterminer la zone de linéarité d'un système de détection d'un système de mesure de photoluminescence.

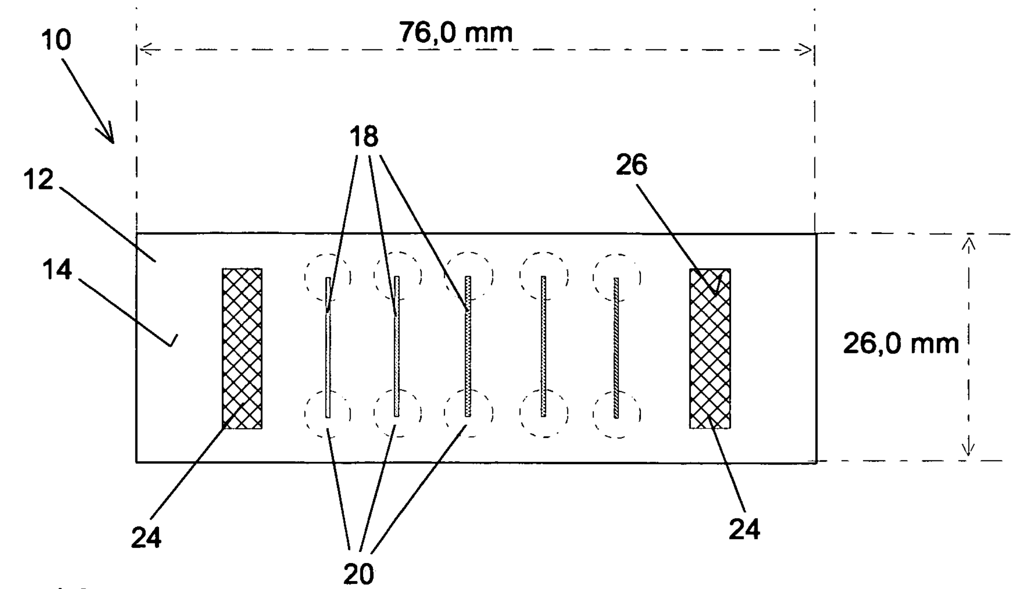


Fig. 1A

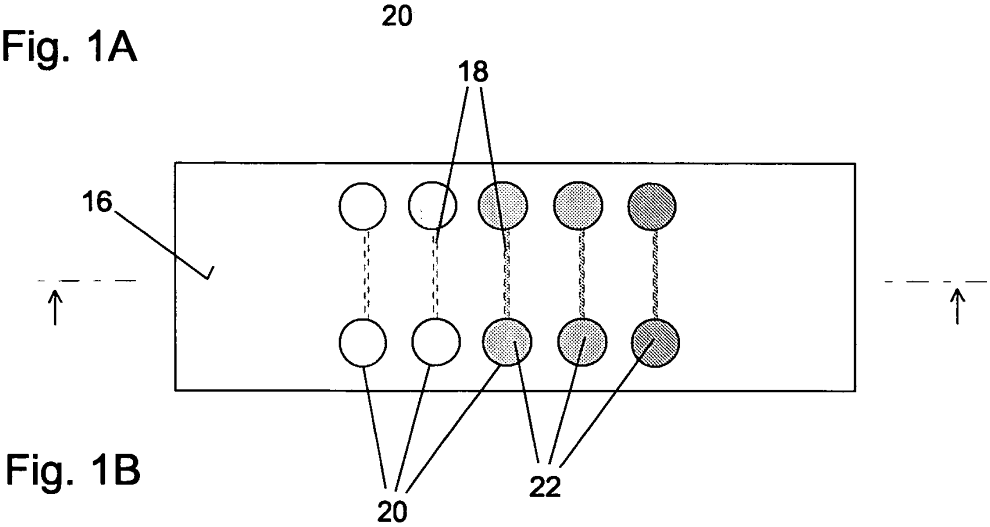


Fig. 1B

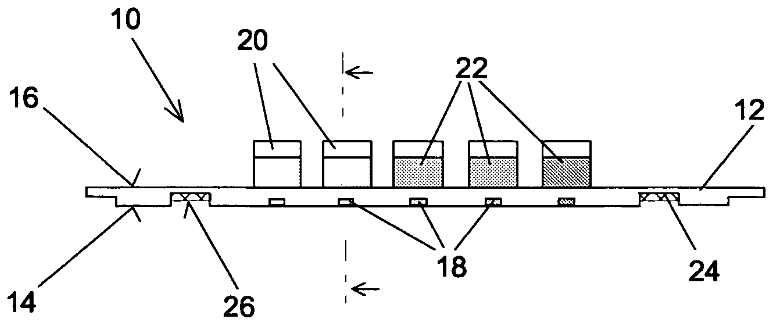


Fig. 1C

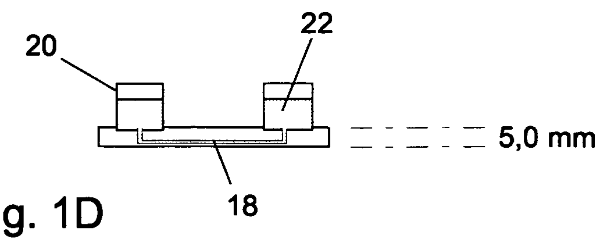


Fig. 1D

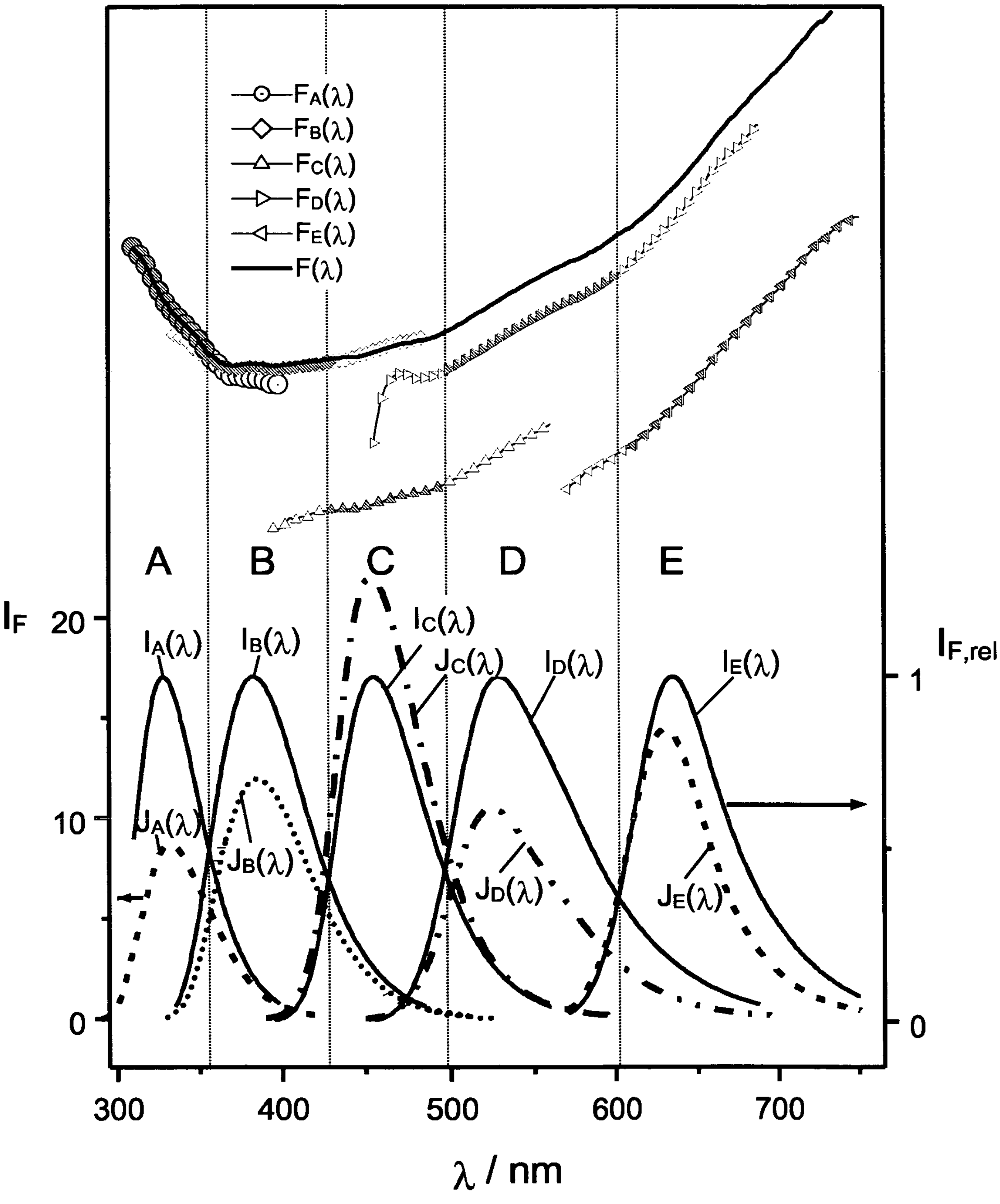

$F_A(\lambda)$
$F_B(\lambda)$
$F_C(\lambda)$
$F_D(\lambda)$
$F_E(\lambda)$
$F(\lambda)$
A
B
C
D
E
$I_F$
20
10
0
$I_A(\lambda)$
$I_B(\lambda)$
$I_C(\lambda)$
$J_C(\lambda)$
$I_D(\lambda)$
$I_E(\lambda)$
$J_A(\lambda)$
$J_B(\lambda)$
$J_D(\lambda)$
$J_E(\lambda)$
$I_{F,rel}$
1
0
300
400
500
600
700
$\lambda$ / nm


Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 03029788 A2
- US 20020092973 A1
- US 6635487 B1
- US 20030030797 A
- DE 102004044717


### In der Beschreibung aufgeführte Nicht-Patentliteratur


- **U. RESCH-GENGER et al.** *J. Fluoresc.,* 2005, vol. 15 (3), 315ff
- **U. RESCH-GENGER et al.** *J. Fluoresc.,* 2005, vol. 15 (3), 337ff
- **R.A. VELAPOLDI ; K.D. MIELENZ.** NBS Spec. Publ. 1980, 260-264
- **J.W. HOFSTRAAT ; M.J. LATUHIHIN.** *Appl. Spectrosc.,* 1994, vol. 48, 436